# EUROPEAN PATENT APPLICATION

(11) **EP 4 782 977 A1**
(43) Date of publication of application: **29.07.2026**
(21) Application number: 26153090.1
(22) Date of filing: 20.01.2026
(51) Int. Cl.: G06F 3/0482, B60K 35/22, A01B 79/00

(54) **WORK VEHICLE**

(30) Priority: 27.01.2025 JP 2025011100; 06.10.2025 JP 2025168612
(71) Applicant: Yanmar Holdings Co., Ltd., Osaka (JP)
(72) Inventor: MIYAI, Kenichi, Okayama-shi (JP); OTA, Kaho, Okayama-shi (JP); KAWAI, Susumu, Osaka-shi (JP); ARAKI, Nobuyuki, Osaka-shi (JP)
(74) Representative: Sekiguchi, Kazuya

(57) **Abstract**

[Problem] Provided is a work vehicle that allows a worker to simultaneously ascertain measurement information and setting information by looking at a display screen of a display unit.

[Solution] A work vehicle includes a display unit. The display unit simultaneously displays measurement information measured as work progresses by the work vehicle and setting information about a setting of the work vehicle.

## Description

### TECHNICAL FIELD

The present invention relates to a work vehicle such as a rice transplanter.

### BACKGROUND ART

In the related art, there is known a rice transplanter that measures the area where work has been performed and displays the measured area on a monitor (see, for example, Patent Document 1).

### PRIOR ART DOCUMENT

### PATENT DOCUMENT

Patent Document 1: JP-A-2019-170272

### SUMMARY OF INVENTION

### TECHNICAL PROBLEM

In the rice transplanter described in Patent Document 1, an area system display screen that displays the area worked by the rice transplanter and a home display screen that displays various settings for the rice transplanter are displayed separately. That is, the measurement information measured as the work progresses (in the above example, the area where the work was performed) and the information about the settings of the rice transplanter (setting information) are displayed on separate screens. In such a display format, a worker cannot simultaneously ascertain the measurement information and the setting information on the display screen of the monitor.

The present invention has been made to solve the above problems, and an object of the present invention is to provide a work vehicle that allows a worker to simultaneously ascertain measurement information and setting information by looking at a display screen of a display unit.

### SOLUTION TO PROBLEM

A work vehicle according to one aspect of the present invention is a work vehicle including a display unit, in which the display unit simultaneously displays measurement information measured as work progresses by the work vehicle and setting information about a setting of the work vehicle.

### ADVANTAGEOUS EFFECTS OF INVENTION

A worker can simultaneously ascertain measurement information and setting information by looking at a display screen of a display unit

### BRIEF DESCRIPTION OF DRAWINGS

Fig. 1 is a side view showing a schematic configuration of a rice transplanter, which is an example of a work vehicle according to an embodiment of the present invention;
Fig. 2 is a perspective view of an operation column of the rice transplanter when viewed diagonally from behind;
Fig. 3 is an enlarged perspective view showing a display unit and an operation unit of the rice transplanter;
Fig. 4 is a front view of a main body of the display unit when viewed from a direction perpendicular to the display screen;
Fig. 5 is an explanatory view showing an example of various types of information displayed on a central display unit of the main body;
Fig. 6 is a front view of a first operation unit of the operation unit when viewed from a button pressing direction;
Fig. 7 is a front view showing another example of the first operation unit;
Fig. 8 is a front view of a second operation unit of the operation unit when viewed from the button pressing direction;
Fig. 9 is a block diagram showing a configuration of a control system for the rice transplanter;
Fig. 10A is an explanatory view showing a display screen of a first page displayed on the display unit;
Fig. 10B is an explanatory view showing a display screen of a second page;
Fig. 10C is an explanatory view showing a display screen of a third page;
Fig. 10D is an explanatory view showing a display screen of a fourth page;
Fig. 11 is an explanatory view schematically showing an order in which a selection frame moves when a select dial is rotated;
Fig. 12A is an explanatory view showing a display screen in which a measurement start time point mark has been switched from that in Fig. 10A;
Fig. 12B is an explanatory view showing a display screen in which the measurement start time point mark has been switched from that in Fig. 12A;
Fig. 12C is an explanatory view showing a confirmation screen for resetting measurement information;
Fig. 13A is an explanatory view showing a setting screen for a seedling amount assist mode;
Fig. 13B is an explanatory view showing a detailed setting screen for the seedling amount assist mode;
Fig. 13C is an explanatory view showing a detailed setting screen for a vertical harvest amount designation mode;
Fig. 14 is an explanatory view showing a setting screen for a planting depth;
Fig. 15A is an explanatory view showing a setting screen for constant fertilization;
Fig. 15B is an explanatory view showing a setting screen for map fertilization;
Fig. 16A is an explanatory view showing a setting screen for sensitivity assist;
Fig. 16B is an explanatory view showing a setting screen for fit synchronization;
Fig. 17A is an explanatory view showing a setting screen for slip ratio correction;
Fig. 17B is an explanatory view showing a setting screen for a slip ratio by manual input;
Fig. 18A is an explanatory view showing a setting screen for storing a work state;
Fig. 18B is an explanatory view showing a details screen for predetermined work setting;
Fig. 18C is an explanatory view showing a screen for confirming changes to work setting;
Fig. 18D is an explanatory view showing an input screen when changing a name of the work setting;
Fig. 19A is an explanatory view showing a setting screen for a meter;
Fig. 19B is an explanatory view showing a setting screen for display brightness;
Fig. 19C is an explanatory view showing a setting screen for a clock time;
Fig. 20A is an explanatory view showing a setting screen for straight-line assist;
Fig. 20B is an explanatory view showing a setting screen for steering sensitivity;
Fig. 20C is an explanatory view showing a setting screen for a path offset;
Fig. 20D is an explanatory view showing a setting screen for simple turning;
Fig. 20E is an explanatory view showing a display screen when simple turning is turned off;
Fig. 20F is an explanatory view showing an adjustment screen for an r-turn radius;
Fig. 20G is an explanatory view showing an adjustment screen for a u-turn radius;
Fig. 20H is an explanatory view showing a setting screen for straight-line assist & PTO linkage;
Fig. 21A is an explanatory view showing a setting screen for fertilization;
Fig. 21B is an explanatory view showing a detailed setting screen for constant fertilization;
Fig. 21C is an explanatory view showing a selection screen for inputting a specific gravity of fertilizer/confirming feeding;
Fig. 21D is an explanatory view showing an input screen for the specific gravity of the fertilizer to be used;
Fig. 21E is an explanatory view showing a display screen when confirmation of feeding is selected on the selection screen;
Fig. 21F is an explanatory view showing a display screen when fertilizer is being fed;
Fig. 21G is an explanatory view showing an input screen for the measured weight of the fertilizer;
Fig. 21H is an explanatory view showing a setting completion screen for the specific gravity of the fertilizer;
Fig. 21I is an explanatory view showing a detailed setting screen for map fertilization;
Fig. 21J is an explanatory view showing an input screen when finely adjusting the amount of fertilizer to be applied in the map fertilization;
Fig. 21K is an explanatory view showing a display screen of the first page of a list of fertilization maps;
Fig. 21L is an explanatory view showing a display screen of the third page of the list of fertilization maps;
Fig. 21M is an explanatory view showing a display screen when map reading is selected on the detailed setting screen of Fig. 21I;
Fig. 21N is an explanatory view showing a display screen for instructing rereading;
Fig. 22 is an explanatory view showing a setting screen for an insecticide and fungicide sprayer;
Fig. 23A is an explanatory view showing a setting screen for a camera;
Fig. 23B is an explanatory view showing a setting screen when a back camera linkage is set to "off";
Fig. 23C is an explanatory view showing a selection screen for a camera that captures an image to be displayed via a back camera linkage;
Fig. 23D is an explanatory view schematically showing a display screen of the current image being captured by the selected camera;
Fig. 24 is an explanatory view showing a display screen of a remaining amount of seedlings on the seedling tray;
Fig. 25A is an explanatory view showing an example of a warning screen;
Fig. 25B is an explanatory view showing a state in which warning content is displayed on a home screen;
Fig. 26A is an explanatory view showing a screen displaying a plurality of sets of setting items and corresponding individual setting information;
Fig. 26B is an explanatory view showing the above screen on the next page;
Fig. 26C is an explanatory view showing the above screen on the further next page;
Fig. 26D is an explanatory view showing a confirmation screen for changing setting items to be displayed;
Fig. 26E is an explanatory view showing the home screen after the setting items have been changed;
Fig. 27 is a front view showing still another example of the first operation unit; and
Fig. 28 is a front view showing another example of the second operation unit.

### DESCRIPTION OF EMBODIMENTS

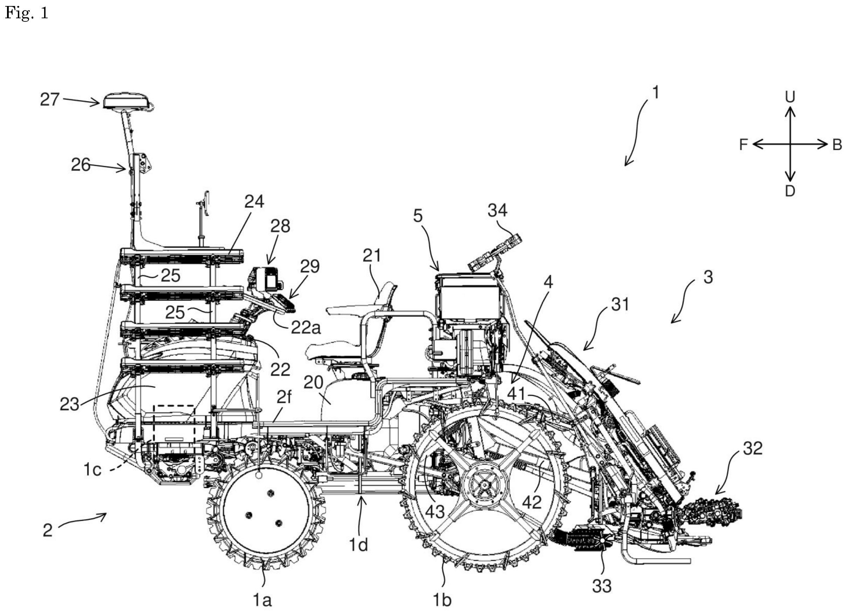

An embodiment of the present invention will be described with reference to the drawings. For the convenience of the following description, unless otherwise specified, directions are defined as follows. First, a traveling direction of a traveling machine body 2 of a rice transplanter 1 (leftward in Fig. 1) is defined as the front (forward), and the opposite direction is defined as the rear (rearward). Furthermore, a left side of the traveling machine body 2 in the traveling direction will be referred to as the left (left side), and a right side in the traveling direction will be referred to as the right (right side). Furthermore, a direction of gravity is defined as a vertical direction, an upstream side is defined as the top (upper), and a downstream side is defined as the bottom (lower). In the drawings, as necessary, the symbol "F" represents the front, the symbol "B" represents the back, the symbol "L" represents the left, the symbol "R" represents the right, the symbol "U" represents the upper side, and the symbol "D" represents the lower side or down side. The upstream side refers to the starting point side when the direction is indicated by an arrow, and is synonymous with the upper side. The downstream side refers to the end point side when the direction is indicated by an arrow, and is synonymous with the lower side.

A display unit 28 and an operation unit 29 to be described below will be described using the up, down, left, and right directions when the display unit 28 is viewed from a direction perpendicular to a display screen, and the operation unit 29 will also be described using the up, down, left, and right directions when the operation unit 29 is viewed from the direction in which buttons are pressed.

### <1. Overview of rice transplanter>

Fig. 1 is a side view showing a schematic configuration of a rice transplanter 1, which is an example of a work vehicle according to an embodiment of the present invention. The rice transplanter 1 includes a traveling machine body 2 and a planting unit 3.

The traveling machine body 2 is supported by left and right front wheels 1a and left and right rear wheels 1b. The traveling machine body 2 includes an engine 1c as a drive source. The power output from the engine 1c is transmitted to driven units via a transmission unit 1d. The driven units include the planting unit 3 in addition to the front wheel 1a and the rear wheel 1b. Therefore, the transmission unit 1d includes a power take off (PTO) shaft for driving the planting unit 3.

The traveling machine body 2 includes a driver's seat 21 and an operation column 22. The driver's seat 21 is provided near the center of the traveling machine body 2 in the front-rear direction. The driver's seat 21 is supported on a floor 2f of the traveling machine body 2 via a support base 20. An accelerator pedal (shift pedal), a brake pedal, and the like are also disposed on the floor 2f.

The operation column 22 is disposed in front of the driver's seat 21, and members to be operated by a worker (pilot, operator) seated in the driver's seat 21 are disposed thereon. For example, the operation column 22 is provided with a steering handle 22a for a worker to operate the direction in which the rice transplanter 1 travels. That is, the rice transplanter 1 is provided with a steering handle 22a (disposed) in front of the driver's seat 21. In addition to the steering handle 22a, various levers and switches (buttons) are disposed on the operation column 22, which will be described later. The operation column 22 is provided at the rear upper part of a hood 23 disposed on the front side of the traveling machine body 2. The engine 1c described above is disposed below and inside the hood 23.

In the traveling machine body 2, spare seedling trays 24 for placing spare seedling mats are provided on both the left and right sides of the hood 23. In the present embodiment, four spare seedling trays 24 are provided on each of the left and right sides of the hood 23, spaced apart in the vertical direction. The number of spare seedling trays 24 can be changed as appropriate.

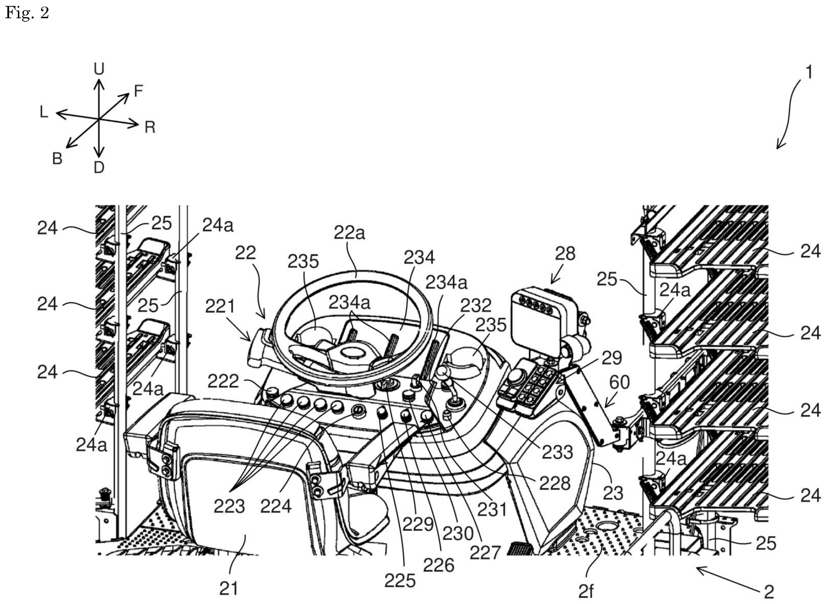

Two support pillars 25 extending in the vertical direction are provided on each of the left and right sides of the hood 23. The support pillars 25 are disposed at intervals in the front-rear direction on both the left and right sides of the hood 23. Each of the spare seedling trays 24 disposed on the right side of the hood 23 is rotatably attached to two support pillars 25 disposed on the right side of the hood 23 via attachment members 24a (see Fig. 2). Similarly, each of the spare seedling trays 24 disposed on the left side of the hood 23 is rotatably attached to two support pillars 25 disposed on the left side of the hood 23 via the attachment members 24a. Each spare seedling tray 24 on the right side of the hood 23 can be folded toward the hood 23 by rotating the right end in a lifting direction. In addition, each spare seedling tray 24 on the left side of the hood 23 can be folded toward the hood 23 by rotating the left end in a lifting direction.

A positioning unit 27 is disposed on the top of each support pillar 25 via a support frame 26. The positioning unit 27 is provided to receive radio wave signals transmitted from positioning satellites to acquire the position information of the vehicle itself, and also to communicate wirelessly with an external remote monitoring device.

A display unit 28 and an operation unit 29 are disposed on the right side of the hood 23, more specifically, on the right side of the steering handle 22a. The display unit 28 and the operation unit 29 will be described in detail later.

The planting unit 3 is connected to the rear of the traveling machine body 2 via a lifting mechanism 4 to be able to move up and down freely. The lifting mechanism 4 includes a top link 41, a lower link 42, and a lifting cylinder 43. The top link 41 and the lower link 42 connect the traveling machine body 2 and the planting unit 3. The lifting cylinder 43 is connected to the lower link 42. For example, by operating a planting lifting lever 233 (see Fig. 2) of the operation column 22, the lifting cylinder 43 is extended and contracted, causing the lower link 42 to rotate and the top link 41 to rotate. This allows the planting unit 3 to be raised and lowered relative to the traveling machine body 2.

The planting unit 3 includes a seedling loading device 31 on which the seedling mat is placed, and a seedling planting mechanism 32. The seedling planting mechanism 32 scrapes one seedling from the seedling mat placed on the seedling loading device 31 and plants the scraped seedling in the field (soil). The planting unit 3 is further provided with a rotor 33 and a marker 34 that can be deployed to the left and right. The rotor 33 is provided to level the rough rice field surface (for example, headland) after turning. The left and right markers 34 are provided to form, on the rice field surface, a trajectory that will serve as a reference for travel in the next process. The planting unit 3 is further provided with a float for detecting the surface condition (hardness) of the field, a rake for detecting the height of the surface of the field, and the like.

In the traveling machine body 2, a fertilizer applicator 5 is provided between the driver's seat 21 and the planting unit 3. The fertilizer applicator 5 is driven by a fertilizer motor to feed a predetermined amount of fertilizer accommodated in a hopper and to supply the fertilizer to the field.

### <2. Switch and the like on Operation Column>

In the present embodiment, some of the various switches that a worker seated in the driver's seat 21 operates during work are disposed on the right side of the steering handle 22a as the operation unit 29, and the remaining switches and levers are disposed on the operation column 22. In the following, the switches and levers disposed on the operation column 22 will be briefly described in order to clearly distinguish them from the switches disposed on the operation unit 29.

Fig. 2 is a perspective view of the operation column 22 when viewed diagonally from behind. In addition to the steering handle 22a described above, a main shift lever 221 is also disposed on the operation column 22. The main shift lever 221 is disposed in front (forward) of the steering handle 22a and extends to the left. The main shift lever 221 is a lever for switching the traveling direction of the rice transplanter 1 (forward/neutral/reverse).

On the operation column 22, diagonally below the main shift lever 221 (towards the driver's seat 21), from left to right, there are disposed a seedling transfer switch 222, a planting row stop switch 223, a key switch 224, a sensitivity adjustment dial 225, a speed setting dial 226, a speed fixing switch 227, and a buzzer stop button 228.

The seedling transfer switch 222 is pressed when replenishing seedling mats from the spare seedling tray 24 onto the seedling tray of the seedling loading device 31 of the planting unit 3. By pressing the seedling transfer switch 222, operation of the accelerator pedal is disabled and power transmission from the engine 1c to the planting unit 3 is also cut off. Furthermore, the rotation speed of the engine 1c also becomes slower.

The planting row stop switch 223 is a switch for stopping the planting of seedlings in a predetermined row, that is, for stopping the operation of the planting claws of the seedling planting mechanism 32 and the seedling feed belt of the seedling loading device 31. In the present embodiment, four planting row stop switches 223 are arranged side by side. For example, in a configuration where eight rows of seedlings are planted, pressing the leftmost planting row stop switch 223 stops planting of rows 1 and 2. Pressing the second planting row stop switch 223 from the left stops planting of rows 3 and 4. Pressing the third planting row stop switch 223 from the left stops planting of rows 5 and 6. Pressing the fourth planting row stop switch 223 from the left (rightmost) stops planting of rows 7 and 8.

A key is inserted into the key switch 224 to start or stop the engine 1c. The sensitivity adjustment dial 225 is operated to adjust the sensitivity of the hydraulic control (lifting control) according to the hardness (softness) of the surface of the field. For example, in soft fields, the float can be adjusted to float slightly by turning the dial to increase the sensitivity (make it more sensitive). Conversely, in hard fields, the float can be adjusted to sink slightly by turning the dial to reduce the sensitivity (make it less sensitive).

The speed setting dial 226 is a dial for setting the maximum speed when the accelerator pedal is depressed. The speed fixing switch 227 is a switch for fixing the traveling speed at an arbitrary speed. The buzzer stop button 228 is a button for stopping the warning sound.

In the operation column 22, a combination switch 229 is disposed on the right side of the steering handle 22a and diagonally forward of the sensitivity adjustment dial 225. The combination switch 229 includes a switch for turning on/off the left and right turn signals, a switch for turning on/off the work lights, and a switch for sounding the horn.

In the operation column 22, on the right side of the combination switch 229 and diagonally forward of the speed setting dial 226, an edge-pushing button 230 is disposed. The edge-pushing button 230 is a button for pushing the seedling tray of the planting unit 3 to the edge. Further diagonally forward of the edge-pushing button 230, a hydraulic pressure changeover switch 231 is disposed. The hydraulic pressure changeover switch 231 is a switch for turning on/off the hydraulic control (lifting control) of the planting unit 3. A robot button 232 is disposed on the right side of the hydraulic pressure changeover switch 231. The robot button 232 is a button for enabling the start of robot work when the rice transplanter 1 has a function for robot work (unmanned fully automatic work), and is provided as necessary.

In the operation column 22, the planting lifting lever 233 is disposed diagonally in front of the buzzer stop button 228. The planting lifting lever 233 is a lever for lifting and lowering the planting unit 3, turning on and off the planting (clutch), and operating the marker 34.

The above-described switches and levers disposed on the operation column 22 are disposed around the steering handle 22a in consideration of ease of use for the worker. The disposition of the switches and levers shown in Fig. 2 is an example, and the present invention is not limited to this disposition.

Additionally, in the operation column 22, a lid portion 234 is disposed diagonally in front of the steering handle 22a. The upper surface of the lid portion 234 is provided with a grip portion 234a extending in the vertical direction. For example, three grip portions 234a are provided and are disposed at intervals in the left-right direction. The number of grip portions 234a is not limited to three, but may be set arbitrarily.

The lid portion 234 is disposed to removably cover the upper opening of a small item storage portion (not shown) provided inside the operation column 22. A worker can take out or put in small items (for example, a cutter, scissors, etc.) in the small item storage portion by grasping the grip portion 234a and removing the lid portion 234. Furthermore, in a state in which the lid portion 234 is attached to the small item storage portion, the worker can place his/her portable terminal between the adjacent grip portions 234a.

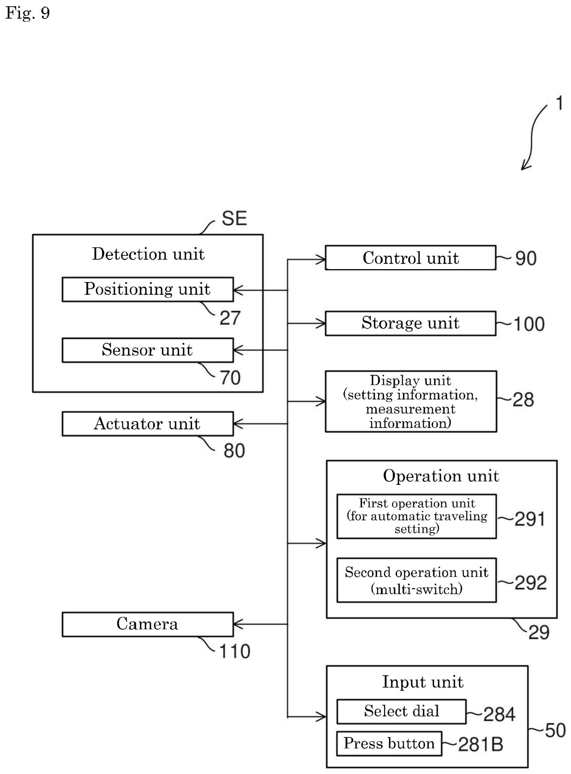

A connecting connector for connecting to a portable memory may be provided inside the small item storage portion. Then, the data file (for example, a fertilization map) stored in the portable memory may be read via the connecting connector and stored in a storage unit 100 of the rice transplanter 1 (see Fig. 9).

In the operation column 22, cup holders 235 are provided on both the left and right sides of the lid portion 234. The cup holder 235 accommodates and supports beverage containers such as plastic bottles and cups. The cup holder 235 may further have a function of accommodating and supporting the worker's portable terminal.

### <3. Display unit and operation unit>

As shown in Fig. 2, the rice transplanter 1 includes a support portion 60. The support portion 60 supports the display unit 28 and the operation unit 29. The support portion 60 is attached to two support pillars 25 disposed on the right side of the hood 23. The display unit 28 is supported by the support portion 60, and thus the display unit 28 is disposed on the right side of the steering handle 22a. That is, the rice transplanter 1 is provided with the display unit 28 disposed on the side of the steering handle 22a.

By disposing the display unit 28 to the side of the steering handle 22a, a worker seated in the driver's seat 21 can visually recognize the display unit 28 without being obstructed by the steering handle 22a. This makes it possible to improve the visibility of the display unit 28.

The operation unit 29 is provided separately from the display unit 28 and is supported by the support portion 60. The operation unit 29 is disposed below the display unit 28. The operation unit 29 may be disposed above the display unit 28. The operation unit 29 is supported by the support portion 60, and thus the operation unit 29 is disposed on the right side of the steering handle 22a. That is, the rice transplanter 1 is provided with the operation unit 29 that is disposed separately from the display unit 28 on the side of the steering handle 22a. The display unit 28 and the operation unit 29 will be described in detail below.

### (3-1. Display unit)

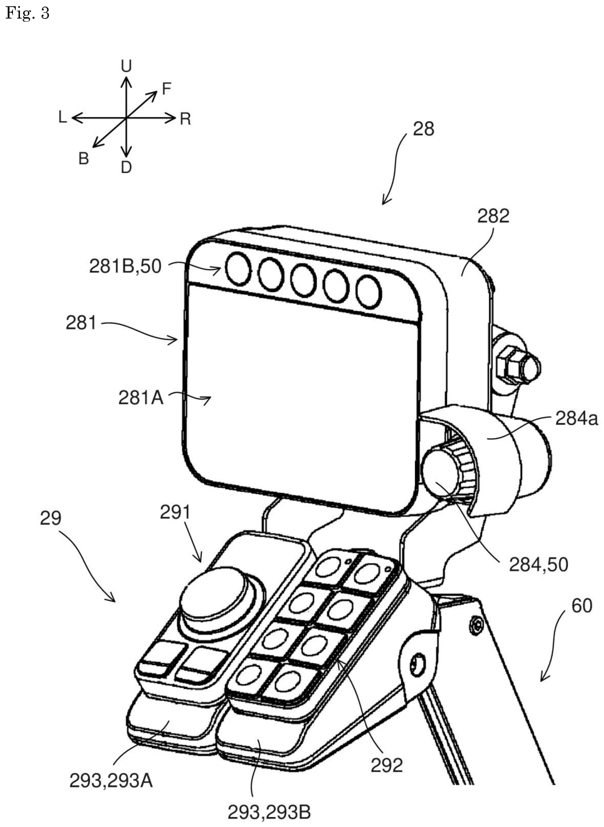

Fig. 3 is an enlarged perspective view of the display unit 28 and the operation unit 29 shown in Figs. 1 and 2. The display unit 28 includes a main body 281 and a display back cover 282. The display back cover 282 is attached to the back surface of the main body 281 (the side opposite to the display screen) and supports the main body 281. The display back cover 282 is supported by the support portion 60 via a support bracket (not shown).

The main body 281 includes an information display unit 281A and a press button 281B. The information display unit 281A is configured with, for example, a liquid crystal display device capable of displaying in color, and displays various types of information. The information display unit 281A may be configured with another display device such as an organic electro-luminescence (EL) display.

### <<3-1-1. Press buttons>>

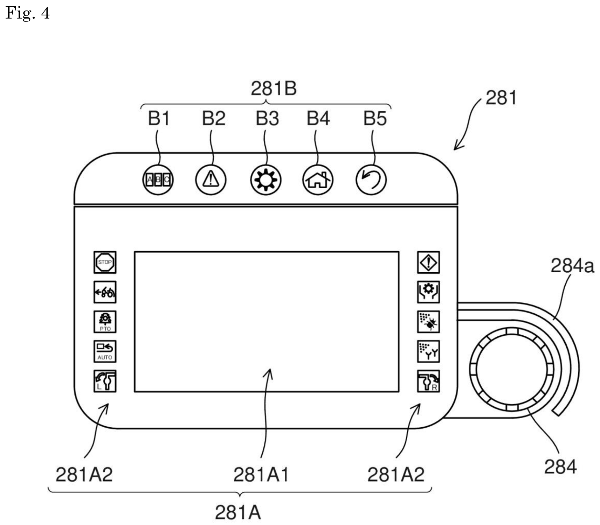

Fig. 4 is a front view of the main body 281 of the display unit 28 as viewed from a direction perpendicular to the display screen of the information display unit 281A. The press button 281B is a button that is physically pressed by the worker. The press button 281B is an example of an input unit 50 that receives various instruction inputs from the worker. Five press buttons 281B are provided in a row above the information display unit 281A. In the example of Fig. 4, the press buttons 281B include a switch button B1, an error list display button B2, a work setting button B3, a home button B4, and a return button B5. The switch button B1, the error list display button B2, the work setting button B3, the home button B4, and the return button B5 are disposed in this order from left to right. The number and disposition of the press buttons 281B are not limited to the example shown in Fig. 4.

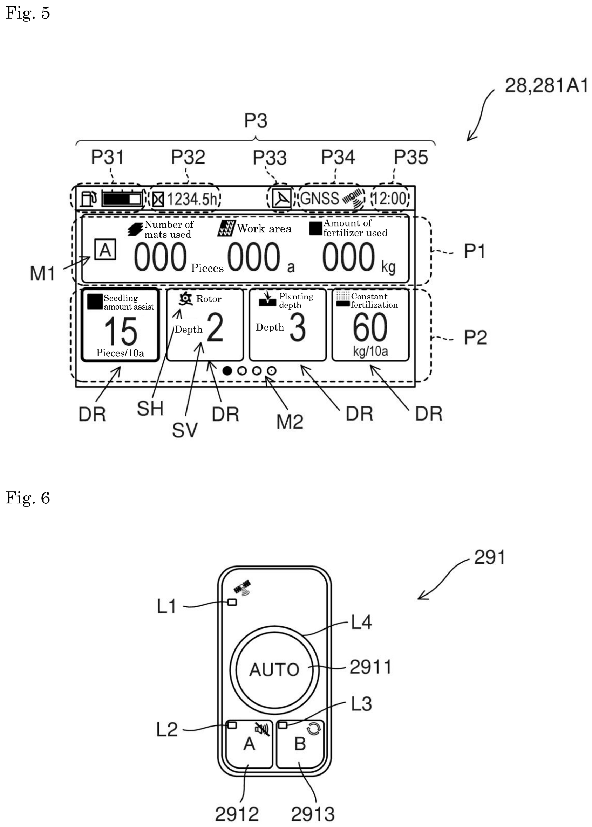

Each time the switch button B1 is pressed, a measurement start time point mark M1 (see Fig. 5) displayed in a central display unit 281A1 of the information display unit 281A is switched between "A", "B", and "C" in this order. The measurement start time point mark M1 will be described in detail later. When the error list display button B2 is pressed, a list of errors that have occurred up to now is displayed in the central display unit 281A1. The work setting button B3 is a button for making settings related to work. When the work setting button B3 is pressed in a state in which a predetermined item displayed in the central display unit 281A1 is selected by a select dial 284 (described later), the screen transitions directly to a screen for making detailed settings for the item.

When the home button B4 is pressed, the display screen of the central display unit 281A1 transitions to the home screen shown in Fig. 5. When the return button B5 is pressed, the current display screen of the central display unit 281A1 transitions to a higher screen in the hierarchical structure.

### <<3-1-2. Select dial>>

The select dial 284 is provided on the right side of the display back cover 282. That is, the select dial 284 is disposed to the side of the display unit 28. The select dial 284 is also an example of the input unit 50. For example, by turning the select dial 284 clockwise or counterclockwise, the worker can select from a plurality of pieces of setting information to be displayed on the information display unit 281A, or can change the display screen. The setting information refers to information about the settings of the rice transplanter 1, for example. An example of the setting information will be described later. Furthermore, by pressing the select dial 284, it is possible to input an instruction to confirm the selected item.

In this way, the rice transplanter 1 includes the input unit 50 for receiving instruction input by the worker and for selecting setting information to be displayed on the display unit 28 (particularly the information display unit 281A). The input unit 50 also includes a press button 281B, and further includes a select dial 284 that can be rotated and pressed. The rice transplanter 1 is provided with the input unit 50, and thus the worker can operate the input unit 50 to make various settings. Furthermore, setting information can be selected and displayed on the display unit 28 in response to an operation on the input unit 50.

The upper and right sides of the select dial 284 are covered by a dial cover 284a. The dial cover 284a may be disposed to cover only the upper side of the select dial 284, or may be disposed to cover the upper side, right side, and lower side of the select dial 284. That is, it is sufficient that at least the upper side of the select dial 284 is covered with the dial cover 284a. In this case, the dial cover 284a not only protects the select dial 284 from rain, but also reduces the concern of the worker coming into contact with the select dial 284 when he or she does not intend to turn the select dial 284. For example, when a worker moves the seedling mat of the spare seedling tray 24 to the rear seedling tray, the dial cover 284a prevents a part of the worker's body from coming into contact with the select dial 284.

Furthermore, if the lower part of the select dial 284 is covered with the dial cover 284a, rainwater may accumulate in the part of the dial cover 284a that faces the select dial 284 downward. For this reason, it is desirable that the dial cover 284a has a shape that covers at least the upper side of the select dial 284 and opens the lower side of the select dial 284, as shown in Figs. 3 and 4.

As described above, the press button 281B serving as the input unit 50 is provided on the main body 281 of the display unit 28, and the select dial 284 is provided on the right side of the display back cover 282 of the display unit 28. That is, the input unit 50 is provided integrally with the display unit 28. In this configuration, the display unit 28 is supported by the support portion 60, and regardless of the rotation position in the vertical direction, the left-right direction, and the front-rear direction, the display unit 28 and the input unit 50 are maintained in a constant positional relationship. Therefore, the worker can easily operate the input unit 50 regardless of the rotation position of the display unit 28.

### <<3-1-3. Information display unit>>

As shown in Fig. 4, the information display unit 281A includes a central display unit 281A1 and a peripheral display unit 281A2.

### <3-1-3-A. Peripheral display unit>

The peripheral display unit 281A2 is disposed around the central display unit 281A1. Icons (marks) corresponding to various types of information are displayed in a lit state on the peripheral display unit 281A2. Accordingly, information corresponding to the lit icon is presented to the worker. The design, color, and the like of the displayed icon may be set as appropriate.

The information displayed on the peripheral display unit 281A2, that is, the information corresponding to the above icons, includes, for example, the following information.

Information displayed on the left side of the information display unit 281A includes an unworkable error (lights up when work is not possible), moving speed (for example, lights up when travelling at high speed between low and high speeds), straight-line assist & PTO linkage function ON, simple turning function ON, left marker deployed, etc. The straight-line assist refers to a function that automatically moves the rice transplanter 1 in a straight line without the worker having to operate the steering handle 22a. In addition, simple turning refers to a function that automatically turns the rice transplanter 1. In simple turning, the pedal operation is performed by the worker.

Information displayed on the right side of the information display unit 281A includes warnings (lights up when a warning occurs), turning the fertilizer applicator 5 on/off, turning the insecticide and fungicide sprayer on/off, turning the herbicide sprayer on/off, right marker deployed, etc. The insecticide and fungicide sprayers and herbicide sprayers are optional devices that can be attached to the rice transplanter 1, and when attached, the corresponding icons will be displayed in a lit state.

In the present embodiment, the icons of the peripheral display unit 281A2 are displayed on the left and right of the central display unit 281A1, but the icons may also be displayed above and below the central display unit 281A1.

### <3-1-3-B. Central display unit>

Fig. 5 is an explanatory view showing an example of various types of information displayed on the central display unit 281A1. The central display unit 281A1 simultaneously displays measurement information P1, setting information P2, and state information P3. The display screen in Fig. 5 is also referred to as a home screen. That is, the display unit 28 simultaneously displays the measurement information P1, the setting information P2, and the state information P3 on the home screen.

### (State information)

The state information P3 is information about the state of the rice transplanter 1. For example, as shown in Fig. 5, the state information P3 includes remaining fuel amount information P31, an hour meter P32, straight-line assist setting information P33, communication information P34, and time information P35. The state information P3 is displayed above the measurement information P1 at the same time (alongside) the measurement information P1.

The remaining fuel amount information P31 indicates the remaining amount of fuel. The hour meter P32 indicates the operating time of the rice transplanter 1 since its purchase. The straight-line assist setting information P33 indicates on/off of the straight-line assist function. The on/off of the straight-line assist function is indicated, for example, by turning on/off the corresponding icon or by displaying the icon in a different color. The time information P35 indicates the current clock time.

The communication information P34 indicates the quality of the positioning method (RTK/DGNSS) used by the positioning unit 27 (see Fig. 1) described above and the communication status with the positioning satellites. Note that RTK refers to the real-time kinematic method, and DGNSS refers to the differential global navigation satellite system (GNSS) method. In Fig. 5, DGNSS is shown in GNSS notation. The quality of the communication status is indicated as follows. For example, when the communication status is good, the icon of the positioning satellite included in the communication information P34 is displayed in green, when the communication status is poor, the icon is displayed in red, and when the communication status is between good and poor, the icon is displayed in yellow. The colors used to display the icons are not limited to the above colors, but may be set as appropriate.

### (Measurement information)

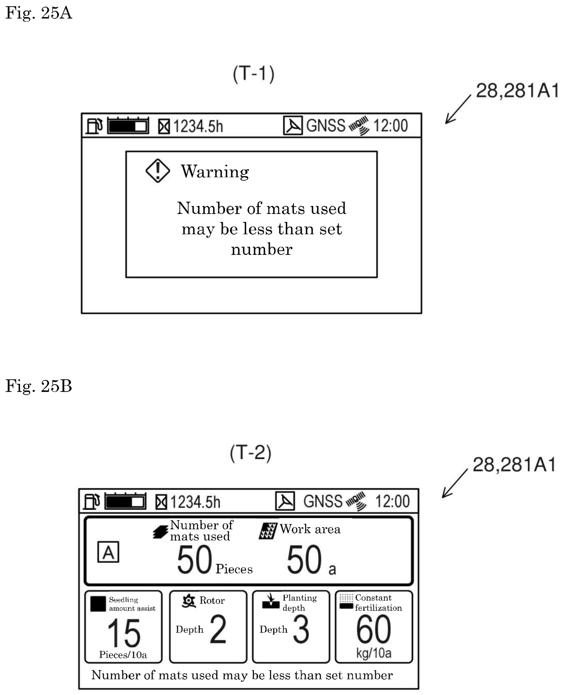

The measurement information P1 is information measured as work progresses by the rice transplanter 1. The measurement information P1 includes individual measurement information measured for a plurality of measurement items. Here, the plurality of measurement items include, for example, the number of seedling mats used in work by the rice transplanter 1, the work area where work was performed, and the amount of fertilizer used. Therefore, the individual measurement information included in the measurement information P1 indicates the actual number of seedling mats used (actually used number), the actual work area where work was performed (actual work area value), and the amount of fertilizer actually used (actual amount of fertilizer). The measurement information P1 is acquired by a control unit 90 (see Fig. 9) performing calculations based on detection information detected by a detection unit SE (see Fig. 9) described later. For example, in a rice transplanter 1 that is not equipped with a fertilizer applicator 5, the amount of fertilizer used (actual amount of fertilizer) is not acquired. Therefore, in this case, the number of seedling mats actually used and the actual work area are displayed on the display unit 28 as the individual measurement information of the measurement information P1 (see, for example, Fig. 25B).

The measurement information P1 is displayed together with the measurement start time point mark M1. The measurement start time point mark M1 is a mark that indicates an arbitrary measurement start time point set by the worker. As the measurement start time point mark M1, for example, three types of "A", "B", and "C" are prepared. By pressing the switch button B1 (see Fig. 4), the measurement start time point mark M1 is switched and displayed in the order of "A", "B", and "C". When "A" is displayed as the measurement start time point mark M1, information measured from the measurement start time point corresponding to "A" is displayed as measurement information P1. Similarly, when "B" is displayed as the measurement start time point mark M1, information measured from the measurement start time point corresponding to "B" is displayed as measurement information P1. Furthermore, when "C" is displayed as the measurement start time point mark M1, information measured from the measurement start time point corresponding to "C" is displayed as measurement information P1.

### (Setting information)

The setting information P2 is information about the settings of the rice transplanter 1. For example, in the example of Fig. 5, when seedling amount assist is set to "on", each setting value such as the number of seedling mats per predetermined area, rotor depth, planting depth, and amount of fertilizer per predetermined area is displayed as setting information P2. Each of the above setting values is set by rotating and pressing the select dial 284 to select a predetermined item, and then rotating and pressing the select dial 284 to select and confirm a numerical value. The setting information P2 is displayed below the measurement information P1 at the same time (alongside) the measurement information P1.

The number of seedling mats when using the seedling amount assist, the rotor depth, the planting depth, and the amount of fertilizer per predetermined area are examples of setting items. The setting values for each of these setting items constitute individual setting information. That is, the setting values for the number of seedling mats, the setting value for rotor depth, the setting value for planting depth, and the setting value for the amount of fertilizer each constitute individual setting information. Therefore, it can be said that the setting information P2 includes individual setting information set for a plurality of setting items.

The setting information P2 includes a page mark M2. The page mark M2 is a mark that indicates which page of the entire screen the screen currently displayed in the central display unit 281A1 corresponds to. In the example of Fig. 5, it is shown that the screen of page 1/4 (the first page of a total of four pages) is currently displayed. That is, the number of dots indicated by the page mark M2 indicates the total number of pages, and the position of the black dot from the left end indicates the number of the page being displayed. When a warning of some kind is to be issued, a warning message may be displayed instead of the page mark M2.

### (Effect of display format on display unit)

As shown in Fig. 5, the display unit 28 (central display unit 281A1) simultaneously displays at least the measurement information P1 and the setting information P2. This allows the worker to simultaneously ascertain the measurement information P1 and the setting information P2 by looking at the display screen of the display unit 28. Therefore, for example, the worker does not need to go through the trouble of switching between screens, as is the case when measurement information and setting information are displayed on separate screens, and this also has the effect of improving convenience.

The measurement information P1 includes a plurality of pieces of individual measurement information (for example, the number of seedling mats actually used during seedling amount assist, the actual work area, and the actual amount of fertilizer). In this case, when the display unit 28 displays the measurement information P1, the plurality of pieces of individual measurement information included in the measurement information P1 are simultaneously displayed on the display unit 28. Therefore, the worker can view the display screen of the display unit 28 and ascertain a plurality of pieces of individual measurement information at once. In this regard, it is desirable that the measurement information P1 includes a plurality of pieces of individual measurement information.

In addition, in order for workers to easily ascertain the progress of the work, it is desirable that the workers are able to simultaneously ascertain at least the actual number of seedling mats used as the work progresses and the area actually worked on. From this viewpoint, it is desirable that the plurality of measurement items include the number of seedling mats used and the work area, as in the present embodiment.

Moreover, the setting information P2 includes a plurality of pieces of individual setting information. In this case, when the display unit 28 displays the setting information P2, the plurality of pieces of individual setting information included in the setting information P2 are simultaneously displayed on the display unit 28. Therefore, the worker can view the display screen of the display unit 28 and ascertain a plurality of pieces of individual setting information at once. In this regard, it is desirable that the setting information P2 includes a plurality of pieces of individual setting information.

### (Display format of setting information)

In the present embodiment, as shown in Fig. 5, the display unit 28 (central display unit 281A1) has an individual setting information display area DR. The individual setting information display area DR is an area that is provided corresponding to each setting item, and displays the setting content of the setting item as individual setting information. That is, the display unit 28 has a plurality of pieces of individual setting information display areas DR that display individual setting information for each setting item. In the example shown in Fig. 5, an individual setting information display area DR is displayed for each of the setting items, such as the number of seedling mats when using seedling amount assist, the rotor depth, the planting depth, and the amount of fertilizer.

At least one individual setting information display area DR displays a figure SH and a setting value SV corresponding to a setting item. In the example of Fig. 5, the individual setting information display area DR, which displays the setting content of the setting item "rotor depth", displays, for example, an illustration of the rotor 33 (see Fig. 1) as a figure SH corresponding to the setting item, and displays, for example, the rotor depth as a relative value of "2" as the setting value SV of the setting item. Similarly, in the individual setting information display area DR for each setting item of the planting depth and the amount of fertilizer, a figure and a setting value corresponding to the setting item are displayed.

In addition, the individual setting information display area DR, which displays the number of seedling mats when using seedling amount assist as a setting item, displays a black quadrangular figure and the setting value for the number of seedling mats, which are unrelated to the setting item. However, instead of the quadrangular figure, a figure associated with the setting item (for example, an illustration showing a seedling mat) may be displayed.

When the figure SH and the setting value SV corresponding to the setting item are displayed in at least one of the plurality of individual setting information display areas DR included in the setting information P2 on the display unit 28, the worker can look at the display unit 28 and make the following recognitions. That is, the worker can easily recognize the setting items based on the figure SH displayed in the individual setting information display area DR, and can also easily recognize that the displayed setting value SV is the setting value for the above setting item. In this regard, it is desirable that at least one individual setting information display area DR displays a figure SH and a setting value SV corresponding to a setting item.

In the present embodiment, the individual setting information display area DR corresponding to the setting item "rotor depth" also displays the characters "rotor" as an abbreviation for the setting item "rotor depth". The above-mentioned characters do not have to be displayed, but from the viewpoint of making it easier for the worker to recognize the setting items, it is desirable that the above-mentioned characters are displayed together.

In the present embodiment, the setting information P2 is displayed below the measurement information P1, but the setting information P2 may be displayed above the measurement information P1 (for example, between the measurement information P1 and the state information P3). Also, for example, the measurement information P1 may be displayed on the left side of the central display unit 281A1, and the setting information P2 may be displayed on the right side thereof. That is, in the central display unit 281A1, the measurement information P1 and the setting information P2 may be displayed simultaneously (side by side) in the vertical direction or the left-right direction. Furthermore, in the central display unit 281A1, the measurement information P1 and the setting information P2 may be simultaneously displayed in a diagonal direction that intersects the vertical direction and the left-right direction. To summarize the above, it can be said that the display unit 28 may display the measurement information P1 on one side of the display screen in one direction, and the setting information P2 on the other side. The one direction mentioned above refers to any one of the vertical direction, the left-right direction, and the diagonal direction within the display screen.

From the viewpoint of ensuring that the worker can simultaneously ascertain the measurement information P1 and the setting information P2, it is desirable to display the measurement information P1 and the setting information P2 side by side in one direction on the display screen of the display unit 28, as described above.

### (3-2. Operation unit)

As shown in Fig. 3, the operation unit 29 includes a first operation unit 291, a second operation unit 292, and an operation support portion 293. The first operation unit 291 receives input of settings related to the automatic travel of the rice transplanter 1. The second operation unit 292 receives instructions for the rice transplanter 1 to perform a predetermined operation. The second operation unit 292 is disposed on the right side of the first operation unit 291. That is, the first operation unit 291 and the second operation unit 292 are disposed side by side in the left-right direction. The second operation unit 292 may be disposed on the left side of the first operation unit 291.

The operation support portion 293 supports the operation unit 29. Specifically, the operation support portion 293 includes a first operation support portion 293A and a second operation support portion 293B. The first operation support portion 293A supports the first operation unit 291 from below. The second operation support portion 293B supports the second operation unit 292 from below. The first operation support portion 293A and the second operation support portion 293B are configured as separate bodies, but may also be configured as an integrated body. The first operation unit 291 and the second operation unit 292 will be described in detail below.

### <<3-2-1. First operation unit>>

Fig. 6 is a front view of the first operation unit 291 when viewed from the button pressing direction. The first operation unit 291 includes an AUTO button 2911, an A button 2912, and a B button 2913. The A button 2912 and the B button 2913 are disposed side by side below the central AUTO button 2911.

The AUTO button 2911 is a button for instructing the rice transplanter 1 to start automatic traveling based on satellite positioning. The A button 2912 and the B button 2913 are buttons that are pressed when creating a reference line that serves as a reference when performing automatic traveling. For example, in a state in which the satellite radio wave positioning level is good (for example, in a state in which lamp L1 is lit green), when the rice transplanter 1 is moved to the work start position and the A button 2912 is pressed, the registration of point A is completed (lamp L2 is lit). Then, when the rice transplanter 1 is moved to the work end position of the process and the B button 2913 is pressed, the registration of point B is completed (lamp L3 is lit). Then, the control unit 90, which will be described later, creates a line segment connecting point A and point B as a reference line. When the rice transplanter 1 is turned manually and the worker presses the AUTO button 2911 at a predetermined timing, lamp L4 around the AUTO button 2911 is lit and the rice transplanter 1 starts to automatically travel. That is, the rice transplanter 1 starts to automatically travel along the reference line. Thereafter, the manual turning and the automatic traveling of the rice transplanter 1 are repeatedly performed.

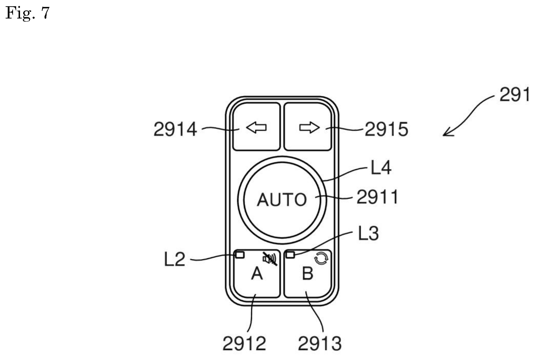

Fig. 7 is a front view showing another example of the first operation unit 291. The first operation unit 291 may further include a left button 2914 and a right button 2915 in addition to the configuration shown in Fig. 6. The left button 2914 is pressed to finely adjust the reference line by shifting it to the left by a predetermined amount. The right button 2915 is pressed to finely adjust the reference line by shifting it to the right by a predetermined amount. The operations relating to automatic traveling are the same as those of the first operation unit 291 in Fig. 6.

### <<3-2-2. Second operation unit>>

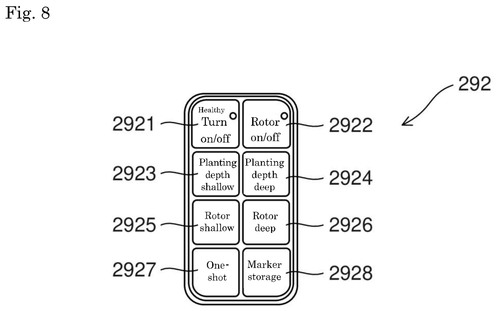

Fig. 8 is a front view of the second operation unit 292 when viewed from the button pressing direction. The second operation unit 292 includes a plurality of switches, and is therefore also called a multi-switch. Specifically, the second operation unit 292 includes a planting unit turning linkage function on/off button 2921, a rotor on/off button 2922, a planting depth "shallow" setting button 2923, a planting depth "deep" setting button 2924, a rotor "shallow" setting button 2925, a rotor "deep" setting button 2926, a one-shot button 2927, and a marker storage button 2928. These are all press buttons for items that the worker wants to operate immediately.

The planting unit turning linkage function on/off button 2921 is a button for setting on/off of a planting unit turning linkage function. The planting unit turning linkage function refers to a function that automatically raises and lowers the planting unit 3, turns the planting clutch on/off (starts/stops planting), and deploys/stores the marker 34 in response to the worker's operation of the steering handle 22a. Each time the planting unit turning linkage function on/off button 2921 is pressed, the planting unit turning linkage function is switched on/off. When the planting unit turning linkage function is set to "on", the lamp on the upper right of the planting unit turning linkage function on/off button 2921 is lit. In addition, in Fig. 8, the notation "Healthy Turn On/Off" is written on the planting unit turning linkage function on/off button 2921, but this notation is an example and other notations may be used.

The rotor on/off button 2922 is a button for turning on/off the rotor 33, that is, for setting whether the rotor 33 is to be used. Each time the rotor on/off button 2922 is pressed, the rotor 33 is switched on/off. When the rotor 33 is set to "on", the rotor 33 moves to a preset height position and the lamp on the upper right of the rotor on/off button 2922 is lit.

The planting depth "shallow" setting button 2923 and the planting depth "deep" setting button 2924 are buttons for adjusting the planting depth. Each time the planting depth "shallow" setting button 2923 is pressed, the planting depth is set shallower by a predetermined amount. Conversely, each time the planting depth "deep" setting button 2924 is pressed, the planting depth is set deeper by a predetermined amount.

The rotor "shallow" setting button 2925 and the rotor "deep" setting button 2926 are buttons for adjusting the height (depth) of the rotor 33. Each time the rotor "shallow" setting button 2925 is pressed, the depth of the rotor 33 is set shallower (the height is set higher) by a predetermined amount. Conversely, each time the rotor "deep" setting button 2926 is pressed, the depth of the rotor 33 is set deeper (the height is set lower) by a predetermined amount.

When the one-shot button 2927 is pressed, the planting unit 3 moves to a preset height. When the marker storage button 2928 is pressed, the left and right markers 34 are stored.

As described above, the operation unit 29 includes the first operation unit 291 and the second operation unit 292. In this configuration, the worker can operate the first operation unit 291 to set the automatic traveling. Furthermore, the worker can operate the second operation unit 292 to cause the rice transplanter 1 to perform a predetermined operation.

Furthermore, the first operation unit 291 and the second operation unit 292 are disposed side by side (in the left-right direction), and thus the operation unit 29 is disposed in a unified manner as a whole. This makes it easier for the worker to operate both the first operation unit 291 and the second operation unit 292.

### <4. Configuration of control system>

Fig. 9 is a block diagram showing a configuration of a control system of the rice transplanter 1. The rice transplanter 1 further includes a sensor unit 70, an actuator unit 80, a control unit 90, and a storage unit 100, in addition to the display unit 28 and the operation unit 29 described above.

The sensor unit 70 is a set of sensors in the rice transplanter 1 that detect predetermined information. For example, the sensor unit 70 includes a sensor that detects the rotation speed of an axle of the rice transplanter 1, a sensor that detects the rotation speed of a star wheel provided on the seedling tray of the seedling loading device 31 (see Fig. 1), a sensor (limit switch) that detects the presence or absence of a seedling mat at a predetermined position on the seedling tray, and a sensor that detects the rotation speed of the fertilizer motor of the fertilizer applicator 5. The sensor unit 70 and the above-mentioned positioning unit 27 are included in a detection unit SE that detects various types of information.

The actuator unit 80 is a set of mechanisms that operate each unit of the rice transplanter 1. For example, the actuator unit 80 includes the lifting mechanism 4, the height adjustment mechanism of the rotor 33, the fertilization drive mechanism (including the fertilizer motor) of the fertilizer applicator 5, the left and right inclination adjustment mechanism (rolling mechanism) of the seedling loading device 31, and the deployment mechanism of the marker 34. The actuator unit 80 also includes an actuator for automatic traveling. The actuator for automatic traveling refers to various actuators that are operated during automatic traveling, and includes, for example, an actuator that steers the steering handle 22a, an actuator that changes the speed of the transmission device of the transmission unit 1d, and the like.

The control unit 90 is configured by an electronic control unit also called an ECU, for example, and controls the driving of each unit of the rice transplanter 1. For example, the control unit 90 controls the operation of the traveling machine body 2 (forward, reverse, stopping, turning, etc.) and the operation of the planting unit 3 (lifting/lowering, driving, stopping, etc.). Furthermore, the control unit 90 controls the actuator for automatic traveling included in the actuator unit 80 based on the information on the vehicle's own position measured by the positioning unit 27 such that the rice transplanter 1 travels along a predetermined travel path. Furthermore, the control unit 90 controls the display on the display unit 28 based on the operations on the input unit 50 and the operation unit 29. The control unit 90 can control each unit of the rice transplanter 1 by executing the operation program stored in the storage unit 100.

Based on the detection result of the sensor unit 70, the control unit 90 can acquire predetermined information as the above-described measurement information P1. For example, the control unit 90 can calculate the amount of seedling mats used (the number of mats used) based on the rotation speed of the star wheel. In addition, the control unit 90 calculates the travel distance of the rice transplanter 1 based on the rotation speed per unit time of the axle, and can calculate the work area where the rice transplanter 1 actually performed work based on the calculated travel distance and information on the vehicle's own position measured by the positioning unit 27. Furthermore, the control unit 90 can calculate the amount of fertilizer used based on the rotation speed of the fertilizer motor detected by the sensor unit 70.

In this way, the rice transplanter 1 of the present embodiment includes the detection unit SE that detects various types of information, and the control unit 90 that acquires measurement information P1 by calculation based on the detection information detected by the detection unit SE. The detection unit SE includes the positioning unit 27 and the sensor unit 70. From the viewpoint of reliably realizing a configuration in which the measurement information P1 is acquired by calculation and the measurement information P1 is displayed on the display unit 28 described above, it is desirable that the rice transplanter 1 includes the control unit 90 described above.

The storage unit 100 is a memory that stores various types of information, and is configured with a random-access memory (RAM), a read-only memory (ROM), a non-volatile memory, and the like. The storage unit 100 stores the operating program of the control unit 90, information detected by the detection unit SE, various setting values set by operating the input unit 50 (e.g., the select dial 284) and the operation unit 29, and the like.

The rice transplanter 1 may optionally include a camera 110. The camera 110 is attached to the rice transplanter 1 to capture an image behind the rice transplanter 1, for example, and is also called a back camera. The number of cameras 110 is not particularly limited, and may be one or more. When a plurality of cameras 110 are provided, one of the cameras 110 may capture an image of the planting position from above such that the planting position in the field by the planting unit 3 can be confirmed. In addition, the other camera 110 may capture an image of the rearmost part of the planting unit 3 for the purpose of preventing collisions. The image captured by the camera 110 can be displayed on the display unit 28. The worker can confirm the planting state of the seedlings based on the image displayed on the display unit 28.

### <5. Transition of display screen of display unit>

The display screen of the display unit 28 described above can transition between a home screen and a setting change screen. Here, the home screen refers to a screen that simultaneously displays at least the measurement information P1 and the setting information P2, as shown in Fig. 5. The setting change screen refers to a display screen for inputting or changing settings for setting items. The setting change screen has a hierarchical structure that allows transitions from an upper layer to a lower layer. The transition of the display screen on the display unit 28 (display control) is realized by the control of the control unit 90. The display unit 28 itself may have the functions of the control unit 90. The transition of the display screen will be described in detail below.

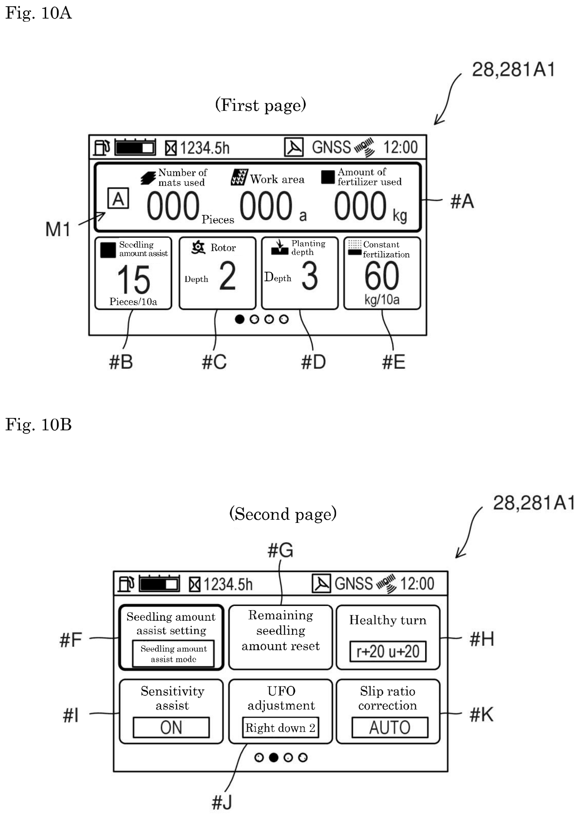

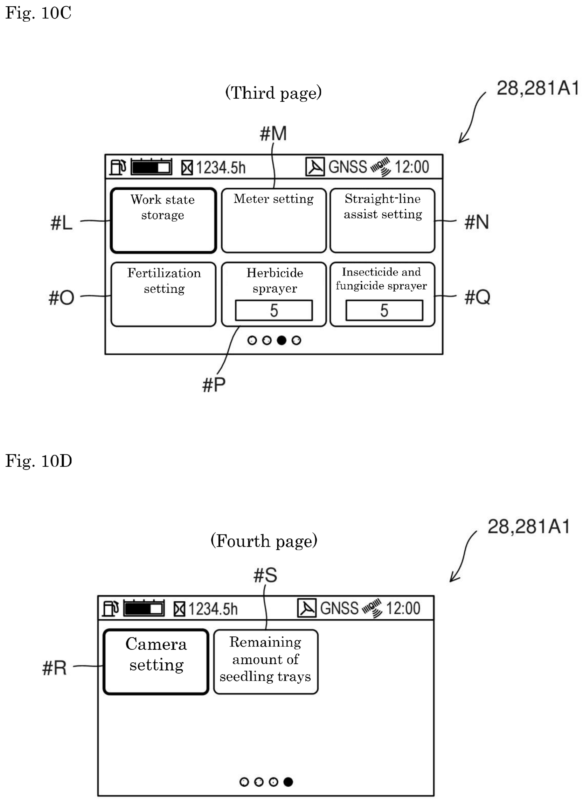

Figs.10A to 10D show display screens of a plurality of pages that can be displayed on the display unit 28. Here, the plurality of pages are assumed to be four pages as an example. That is, Fig. 10A shows the display screen of the first page. Fig. 10B shows the display screen of the second page. Fig. 10C shows the display screen of the third page. Fig. 10D shows the display screen of the fourth page. The number of the plurality of pages may be any number other than four.

In the present embodiment, when the select dial 284 is rotated to the right in a state in which the first page of Fig. 10A is displayed on the display unit 28, the selection frame (shown by a thick rectangular line) moves to areas #A, #B, #C, #D, and #E in that order on the display screen of the first page. Here, area #A is an area that displays the measurement information P1 described above. Specifically, area #A displays the measured number of seedling mats used, the work area, and the amount of fertilizer used. Areas #B to #E are the individual setting information display areas described above. Specifically, area #B is an area that displays the setting value for the number of seedling mats when seedling amount assist is used. Area #C is an area that displays the setting value of the rotor depth. Area #D is an area that displays the setting value of the planting depth. Area #E is an area that displays the setting value of the amount of fertilizer used.

When the select dial 284 is further rotated to the right, the display screen transitions from the first page shown in Fig. 10A to the second page shown in Fig. 10B, and the selection frame moves to area #F. When the select dial 284 is further rotated to the right, the selection frame moves to areas #G, #H, #I, #J, and #K in this order on the display screen of the second page.

Here, area #F is an area that receives transition to a setting screen for the seedling amount assist mode. Area #G is an area that receives the transition to a reset screen for the remaining seedling amount. Area #H is an area that receives transition to a setting screen for the planting unit turning linkage function (healthy turn). Area #I is an area that receives transition to a setting screen for the sensitivity assist. Area #J is an area that receives transition to a UFO adjustment screen, that is, a setting screen for the degree of right down or left down of the planting unit 3 (see Fig. 1). Area #K is an area that receives transition to a setting screen for slip ratio correction.

When the select dial 284 is further rotated to the right, the display screen transitions from the second page shown in Fig. 10B to the third page shown in Fig. 10C, and the selection frame moves to area #L. When the select dial 284 is further rotated to the right, the selection frame moves to areas #M, #N, #O, #P, and #Q in this order on the display screen of the third page.

Here, area #L is an area that receives transition to a storage screen for the work state. Area #M is an area that receives transition to a meter setting screen. Area #N is an area that receives transition to a straight-line assist setting screen. Area #O is an area that receives transition to a fertilization setting screen. Area #P is an area that receives transition to a setting screen for the herbicide sprayer. Area #Q is an area that receives transition to a setting screen for the insecticide and fungicide sprayer.

When the select dial 284 is further rotated to the right, the display screen transitions from the third page shown in Fig. 10C to the fourth page shown in Fig. 10D, and the selection frame moves to area #R. When the select dial 284 is further rotated to the right, the selection frame moves to area #S on the display screen of the fourth page. Here, area #R is an area that receives transition to a screen for the camera setting. Area #S is an area that receives transition to a confirmation screen for the remaining amount of seedlings on the seedling tray (the remaining amount of seedlings placed on the seedling tray). Note that other areas may be displayed on the fourth page following area #S.

On the other hand, when the select dial 284 is rotated in the opposite direction, i.e., to the left in a state in which the selection frame is located in area #S, the selection frame will move in the reverse order to that described above, and the page on the display screen will transition (towards the page with the lower page number) at a predetermined timing. In addition, when the select dial 284 is rotated to the right in a state in which the selection frame is located in area #S, the display screen may transition from the fourth page shown in Fig. 10D to the first page shown in Fig. 10A.

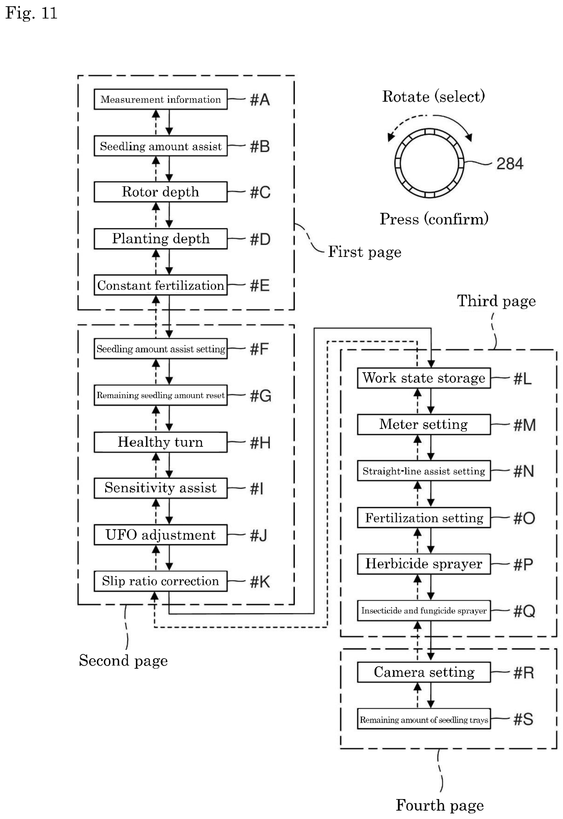

Fig. 11 schematically shows the order in which the selection frame moves when the select dial 284 is rotated as described above. When the select dial 284 is rotated to the right, the selection frame moves in the direction from area #A toward area #S. Conversely, when the select dial 284 is rotated to the left, the selection frame moves from area #S toward area #A. Pressing the select dial 284 in a state in which the selection frame is located in a predetermined area selects the area in which the selection frame is located.

The display screen of the first page (areas #A to #E) shown in Fig. 10A corresponds to the home screen. On the other hand, the display screens of the second page (areas #F to #K), the third page (areas #L to #Q), and the fourth page (areas #R to #S) shown in Figs. 10B to 10D correspond to setting change screens. In the present embodiment, as described above, the setting change screen has a hierarchical structure. Therefore, the screens of each hierarchical level included in each setting change screen are also included in the setting change screen.

The display screen when each area is selected will be further described below. In the following description, "select" means that the worker turns the select dial 284 to position the selection frame in a predetermined area. Also, "confirm" means that the worker presses the select dial 284 to confirm the selection. Also, "pressing the select dial 284" means a short press of the select dial 284, and is distinguished from a long press. A long press refers to pressing continuously for a predetermined time (for example, 5 seconds) or more, and a short press refers to pressing the select dial 284 for less than the predetermined time. Furthermore, in the following description, for setting items that are displayed on a screen similar to other setting items, illustrations and descriptions of the screen for that setting item may be omitted.

### (A. Work status switching)

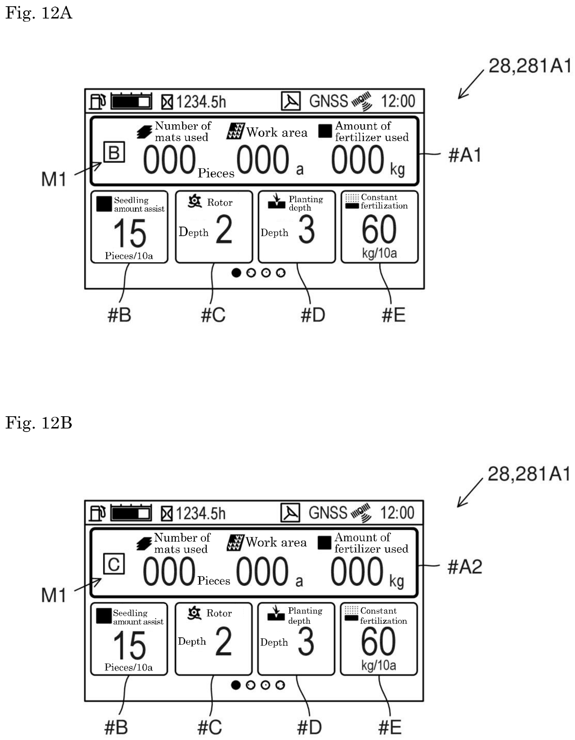

As shown in Fig. 10A, when the worker presses the switch button B1 (see Fig. 4) on the display unit 28 in a state in which "A" is displayed in area #A as the measurement start time point mark M1 and area #A is selected, the display of area #A changes to the display of area #A1 shown in Fig. 12A. That is, the measurement start time point mark M1 is switched from "A" to "B". Furthermore, when the worker presses the switch button B1 again, the display in area #A1 changes to the display in area #A2 shown in Fig. 12B. That is, the measurement start time point mark M1 is switched from "B" to "C". Note that Figs. 12A and 12B also constitute the home screen.

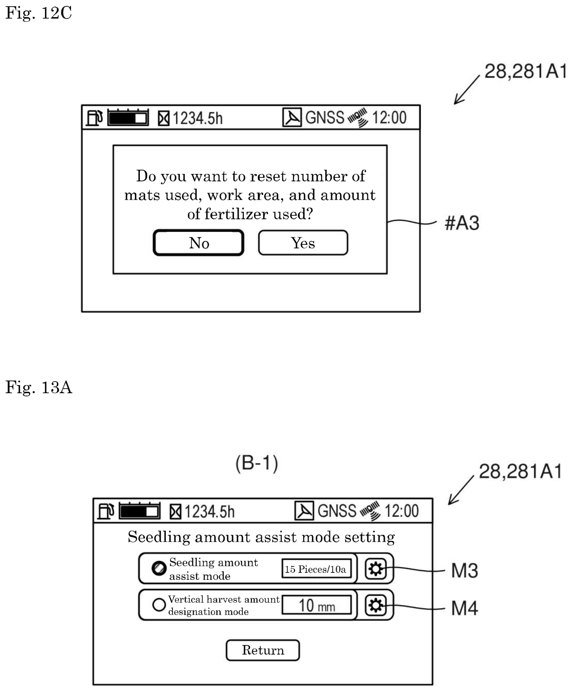

When the worker presses the select dial 284 in any one of the states shown in Figs. 10A, 12A, and 12B, a reset confirmation screen is displayed as a pop-up on the display unit 28 as shown in Fig. 12C. In Fig. 12C, the display area of the popped-up confirmation screen is indicated by #A3. When the worker selects and confirms "Yes", all of the measurement information P1 corresponding to the displayed measurement start time point mark M1 is reset. For example, when "Yes" is selected and confirmed in a state in which "C" is displayed as the measurement start time point mark M1, all of the measurement information P1 (the number of seedling mats used, the work area, and the amount of fertilizer used) measured from the measurement start time point corresponding to "C" is reset. On the other hand, when the worker operates the select dial 284 to select and confirm "No", the screen returns to the previous display screen.

### (B. Seedling amount assist mode setting)

When the worker operates the select dial 284 to select and confirm area #B in Fig. 10A, a setting screen B-1 for the seedling amount assist mode is displayed on the display unit 28 as shown in Fig. 13A. Seedling amount assist refers to a function that automatically adjusts the vertical harvest amount of seedlings such that the number of seedling mats used per predetermined area of the field becomes a predetermined number. The vertical harvest amount is the same as the amount of seedlings scraped off by the seedling planting mechanism 32 from the seedling mat placed on the seedling loading device 31.

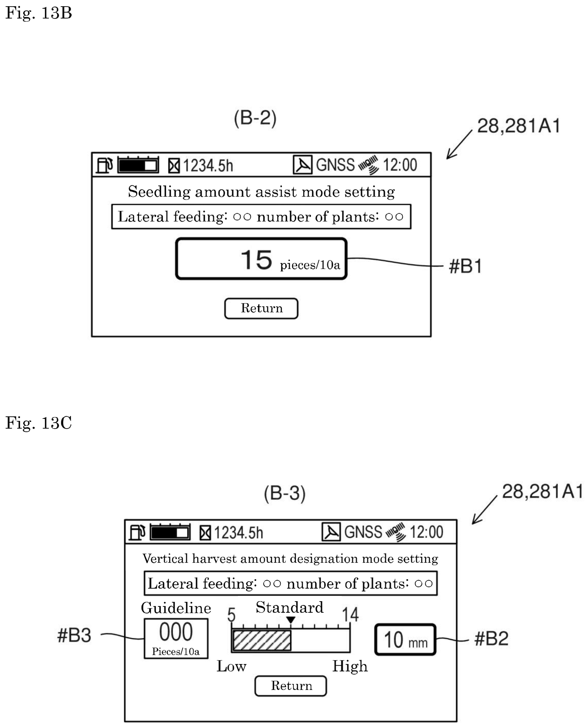

When the worker selects and confirms the "seedling amount assist mode" on the setting screen B-1, the selection frame moves to a setting mark M3 on the right side thereof. When the worker presses the select dial 284 in a state in which the selection frame is located at the setting mark M3, a detailed setting screen B-2 for the seedling amount assist mode is displayed on the display unit 28 as shown in Fig. 13B. In addition, on the display screen shown in Fig. 10A, the worker may operate the select dial 284 to select and confirm area #B, and then the screen may transition directly to the setting screen B-1 shown in Fig. 13B.

In area #B1 of the detailed setting screen B-2, the worker can operate the select dial 284 to set and input the number of seedling mats per predetermined area (for example, 10 ares). Thereafter, when the worker presses the select dial 284, the set number of mats is finally confirmed. When the worker selects and confirms "return" on the detailed setting screen B-2, the screen returns to the previous setting screen B-1. Furthermore, when the worker selects and confirms "return" on the setting screen B-1, the screen returns to the display screen shown in Fig. 10A.

On the other hand, when the worker selects and confirms the "vertical harvest amount designation mode" on the setting screen B-1 shown in Fig. 13A, the selection frame moves to a setting mark M4 on the right side thereof. When the worker presses the select dial 284 in a state in which the selection frame is located at the setting mark M4, a detailed setting screen B-3 for the vertical harvest amount designation mode is displayed on the display unit 28 as shown in Fig. 13C.

In area #B2 of the detailed setting screen B-3, the worker operates the select dial 284 to manually set the vertical harvest amount of seedlings. Additionally, when planting is performed at the set vertical harvest amount, the control unit 90 calculates a guideline of the amount of seedling mats to be used per predetermined area and displays it in area #B3. When the worker selects and confirms "return" on the detailed setting screen B-3, the screen returns to the previous setting screen B-1.

There are two types of seedling mats: standard seedlings and dense seedlings. In the case of dense seedlings, the amount of seedlings in one seedling mat is about 2 to 3 times that of standard seedlings. Therefore, when dense seedlings are used as seedling mats, the vertical harvest amount is set between 5 (low) and 14 (high), with the standard being around 10. On the other hand, when standard seedlings are used as seedling mats, the vertical harvest amount is set in a larger range than for dense seedlings, specifically between 8 (low) and 17 (high), with the standard being around 13.

In addition, the detailed setting screens B-2 and B-3 simultaneously display the mechanically preset amount of lateral feeding and number of plants. Here, the amount of lateral feeding refers to the number of lateral feedings, that is, the number of times the seedling mat is scraped off in the lateral direction. The number of plants refers to the setting value for the spacing between plants.

Furthermore, when the worker selects and confirms the "vertical harvest amount designation mode" on the setting screen B-1, the display of "seedling amount assist" displayed in area #B shown in Fig. 10A is switched to the display of "vertical harvest amount". Then, the display of "seedling amount assist mode" in area #F shown in Fig. 10B is switched to the display of "vertical harvest amount designation mode". Furthermore, when area #B is selected and confirmed in a state in which the "vertical harvest amount designation mode" is set, the display screen of the display unit 28 may transition to the setting screen B-1 shown in Fig. 13A, or may transition directly to the detailed setting screen B-3 shown in Fig. 13C.

### (C. Rotor depth setting, D. Planting depth setting)

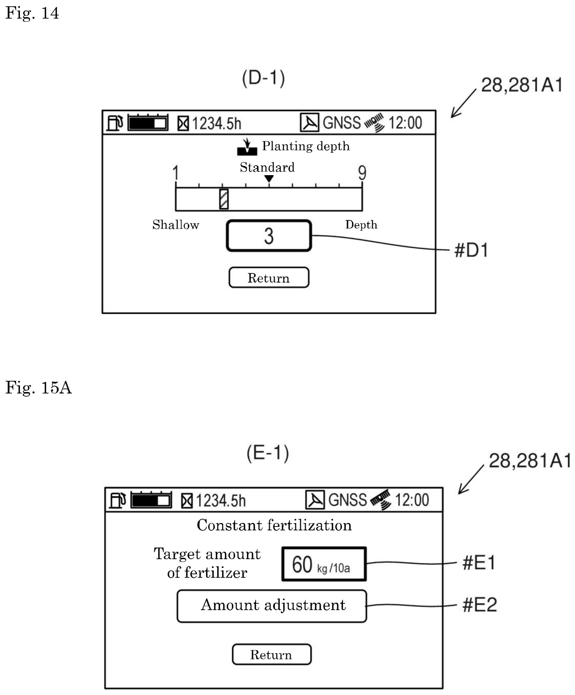

When the worker operates the select dial 284 to select and confirm area #C in Fig. 10A, a setting screen for the rotor depth is displayed on the display unit 28. Furthermore, when the worker operates the select dial 284 to select and confirm area #D in Fig. 10A, a setting screen D-1 for the planting depth is displayed on the display unit 28 as shown in Fig. 14.

Here, the setting screen for the rotor depth has the same display format as the setting screen D-1 for the planting depth except for the setting items. Therefore, the setting screen for the planting depth will be described below, and the description of the setting screen for the rotor depth will be substituted for the description of the setting screen.

In area #D1 of the setting screen D-1 for the planting depth shown in Fig. 14, the worker operates the select dial 284 to set the planting depth. Planting depth is set between 1 (shallow planting) and 9 (deep planting). When the worker selects and confirms "return" on the setting screen D-1, the screen returns to the display screen shown in Fig. 10A.

### (E. Fertilizer amount setting)

When the worker operates the select dial 284 to select and confirm area #E in Fig. 10A, a setting screen for the amount of fertilizer is displayed on the display unit 28. Here, there are two types of fertilization methods: constant fertilization and map fertilization (variable fertilization). Constant fertilization refers to a method of spreading fertilizer at a constant amount of fertilizer per predetermined area, regardless of the location within the field. In contrast, map fertilization refers to a method of spreading fertilizer on a field based on a fertilization map of the field. A fertilization map is a map of the amount of fertilizer that is set according to the soil fertility (the soil's overall ability to grow crops) of each location within the field, or according to the amount of fertilizer that the worker sets at his or her discretion for each location within the field. Therefore, in map fertilization, the amount of fertilizer per predetermined area may vary depending on the location within the field. The selection screen for the fertilization method will be described later.

In a case in which constant fertilization is set, when area #E in Fig. 10A is selected and confirmed, a setting screen E-1 for constant fertilization is displayed on the display unit 28, as shown in Fig. 15A. In area #E1 of the setting screen E-1, the worker operates the select dial 284 to set a target amount of fertilizer per predetermined area.

On the setting screen E-1, when the worker operates the select dial 284 to select and confirm area #E2, a setting screen for amount adjustment is displayed on the display unit 28. The setting screen for amount adjustment will be described in detail later.

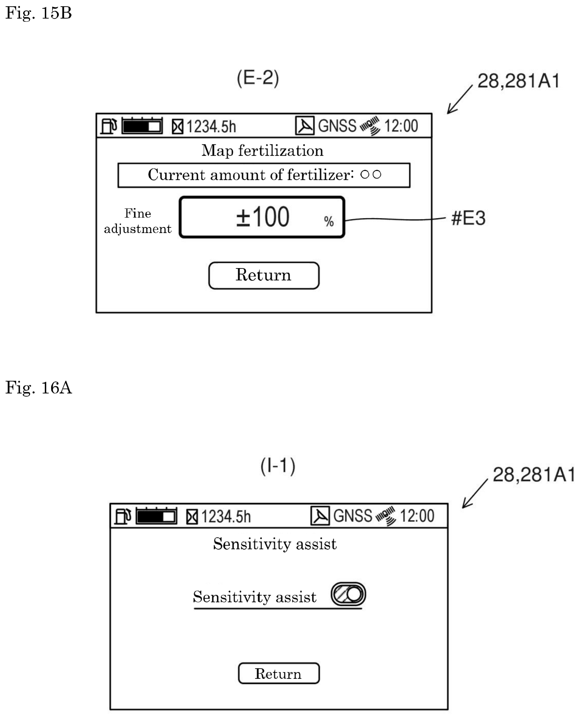

On the other hand, in a case in which map fertilization is set, when area #E in Fig. 10A is selected and confirmed, a setting screen E-2 for map fertilization is displayed on the display unit 28, as shown in Fig. 15B. In area #E3 of the setting screen E-2, the worker can operate the select dial 284 to finely adjust the amount of fertilizer. For example, the worker operates the select dial 284 to decrease the numerical value displayed in area #E3 from the reference 100% to A% or increase the numerical value to B%. This allows fertilization to be performed by setting (changing) the amount of fertilizer to an amount of A% (a decrease) or an amount of B% (an increase) of the amount of fertilizer determined based on the fertilization map. In addition, on the setting screen E-2, the notation "±100%" indicates that 100% is the reference numerical value.

When the worker selects and confirms "return" on the detailed setting screen E-1 or E-2, the screen returns to the display screen shown in Fig. 10A.

### (F. Seedling amount assist setting)

When the worker operates the select dial 284 to select and confirm area #F in Fig. 10B, a setting screen similar to that displayed when the worker selects and confirms area #B in Fig. 10A is displayed. That is, as shown in Fig. 13A, the setting screen B-1 for the seedling amount assist mode is displayed on the display unit 28. The input or change of settings on the setting screen B-1 is as described above.

Therefore, when setting the seedling amount assist mode, there are two methods: one is to select and confirm area #B in Fig. 10A, and the other is to select and confirm area #F in Fig. 10B. However, in the latter method, it is necessary to perform one operation (operation of the select dial 284) to transition from the first page of Fig. 10A to the second page of Fig. 10B. In this regard, in the former method, the setting screen B-1 for the seedling amount assist mode can be displayed directly without screen transition from the first page to the second page. This allows the worker to quickly set and change the seedling amount assist mode.

In this way, the former method is desirable because it allows the worker to change settings quickly without having to operate the select dial 284 to transition the display screen from the home screen (first page) to the setting change screen (second page). That is, when a setting item included in the setting information P2 displayed on the home screen of Fig. 10A ("seedling amount assist" in the above example) is selected, it is desirable that the display screen of the display unit 28 transitions directly from the home screen to a lower-layer screen (the setting screen B-1 in the above example) that can be transitioned from the setting change screen corresponding to the selected setting item (the display screen of the second page in the above example).

In a case in which the screen transitions from the display screen shown in Fig. 10B (by selecting area #F) to the setting screen B-1 for the seedling amount assist mode, when the worker selects and confirms "return" on the setting screen B-1, the screen returns to the display screen shown in Fig. 10B, but the screen may also return to the home screen of Fig. 10A.

### (G. Remaining seedling amount reset setting)

When the worker operates the select dial 284 to select and confirm area #G in Fig. 10B, a screen similar to that in Fig. 12C is displayed as a pop-up. However, the display of "Do you want to reset the number of mats used, the work area, and the amount of fertilizer used?" shown in Fig. 12C is replaced with the display of "Do you want to reset the remaining seedling amount?". When the worker selects and confirms "Yes", the remaining seedling amount is reset. On the other hand, when the worker operates the select dial 284 to select and confirm "No", the screen returns to the display screen shown in Fig. 10B. The remaining seedling amount refers to the amount of seedlings (amount of seedling mats) remaining on the seedling tray.

### (H. Planting unit turning linkage function (healthy turn) setting)

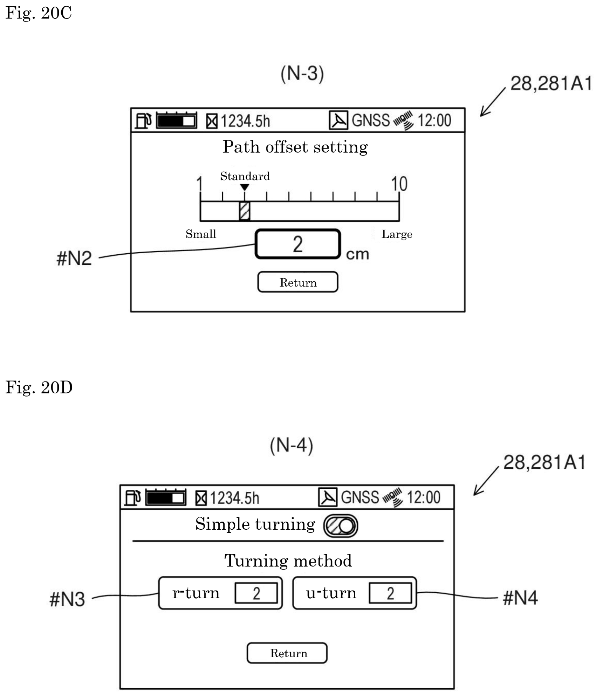

When the worker operates the select dial 284 to select and confirm area #H in Fig. 10B, in a case in which the planting unit turning linkage function is set to "on", a screen for inputting the timing to start planting after turning is displayed. The above screen is similar to the screen displayed in the simple turning setting described later (see Figs. 20D to 20E), and therefore the description thereof will be omitted here. The on/off of the planting unit turning linkage function is set by operating the above-mentioned planting unit turning linkage function on/off button 2921 (see Fig. 8).

There are two types of turning methods for healthy turn and simple turning: u-turn and r-turn (back turn). The u-turn is a 180° turning while moving forward only. The r-turn is a method of moving forward to the bank, then moving backward once, and then moving forward to make a 180° turn. Area #H displays the timing for starting planting set for each of the u-turn and the r-turn. For example, the timing is displayed as a numerical value between -100 and +100, with - (minus) indicating that planting will begin earlier than the reference after turning, and + (plus) indicating that planting will begin later than the reference.

### (I. Sensitivity assist setting)

When the worker operates the select dial 284 to select and confirm area #I in Fig. 10B, a setting screen I-1 for sensitivity assist is displayed on the display unit 28 as shown in Fig. 16A. Sensitivity assist refers to a function that automatically adjusts the float's sinking amount (sensitivity) according to the hardness of the surface of the field. When the sensitivity is to be adjusted manually, the sensitivity adjustment dial 225 (see Fig. 2) described above may be operated.

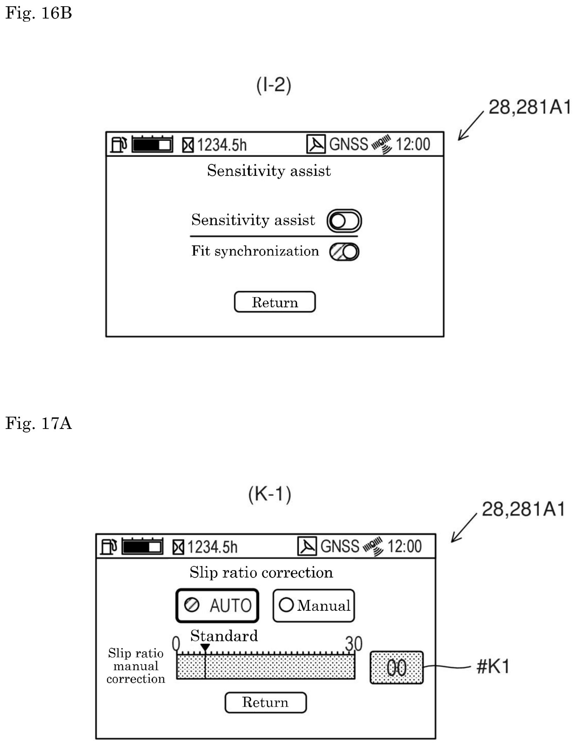

On the setting screen I-1 in Fig. 16A, the worker can operate the select dial 284 to set on/off of sensitivity assist. When sensitivity assist is set to "off", a setting screen I-2 for fit synchronization in Fig. 16B is displayed on the display unit 28. On the setting screen I-2, the worker can operate the select dial 284 to set on/off of fit synchronization.

Here, the fit synchronization refers to a function that prevents shallow planting depth during high-speed work. When the sensitivity assist is set to "off", as the vehicle speed increases, the float cuts through the water and tries to rise, causing the planting unit 3 to try to rise. By setting the fit synchronization to "on", the planting unit 3 is prevented from rising during high-speed work, thereby improving planting stability.

When the worker selects and confirms "return" on the setting screen I-1 or I-2, the screen returns to the display screen shown in Fig. 10B.

### (J. UFO adjustment)

When the worker operates the select dial 284 to select and confirm area #J in Fig. 10B, a setting screen for UFO adjustment is displayed on the display unit 28. Normally, even if the traveling machine body 2 inclines left or right due to unevenness in the tillage pan, the control unit 90 performs control (rolling control) to keep the planting unit 3 horizontal. This allows the planting depth to be kept constant.

On the other hand, when planting in mountainous areas, for example, the rice field surface may be inclined. In this case, in order to keep the planting depth constant, it is necessary to incline the left and right angles of the planting unit 3 relative to the traveling machine body 2. The UFO adjustment refers to adjusting the left and right inclination angle (degree of inclination) of the planting unit 3. By the UFO adjustment, even if the rice field surface is inclined, the planting unit 3 can be made parallel to the rice field surface, making it possible to keep the planting depth constant.

On the setting screen for UFO adjustment, for example, an area is displayed in which the worker can input the degree of left and right inclination of the planting unit 3 by operating the select dial 284. The degree of inclination corresponds to any level when the range between the numerical value indicating the maximum degree of left down of the planting unit 3 and the numerical value indicating the maximum degree of right down is divided into a plurality of stages (levels).

### (K. Slip ratio correction)

If the soil is soft and the wheels of the rice transplanter 1 slip, a difference (deviation) will occur between the travel (movement) distance of the rice transplanter 1 measured based on the rotation speed of the axle and the travel distance obtained based on satellite positioning. The above difference causes an error in the calculation of the work area of the rice transplanter 1. Therefore, by inputting in advance a slip ratio that indicates the degree to which the wheels are slipping, the control unit 90 can accurately calculate the work area based on the slip ratio.

When the worker operates the select dial 284 to select and confirm area #K in Fig. 10B, a setting screen K-1 for slip ratio correction is displayed on the display unit 28, as shown in Fig. 17A. There are two types of slip ratio correction: automatic correction and manual correction. When the worker operates the select dial 284 to select and confirm "AUTO", the control unit 90 automatically calculates a slip ratio Sr (%) from the difference between a travel distance D1 (km) measured based on the rotation speed of the axle and a travel distance D2 (km) obtained based on satellite positioning, and calculates the work area. For example, Sr = (D2 - D1)/D2) × 100. For example, when the slip ratio is 5%, the work area is calculated as (planting width) × (travel distance D1) × 95(%). When automatic correction of the slip ratio is selected and confirmed, area #K1 for inputting the slip ratio is grayed out on the setting screen K-1. That is, it is not possible to input a slip ratio in area #K1.

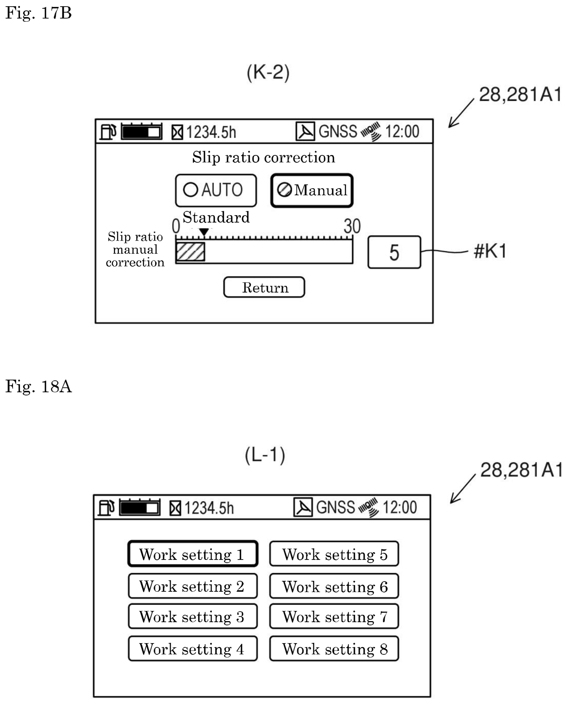

On the other hand, when the worker operates the select dial 284 on the setting screen K-1 to select and confirm "Manual", the screen transitions to a setting screen K-2 shown in Fig. 17B. On the setting screen K-2, the worker can operate the select dial 284 to input the slip ratio in area #K1. In the example of Fig. 17B, the worker operates the select dial 284 to input 5% as the slip ratio.

Furthermore, when the slip ratio is manually input, the input slip ratio is displayed as a bar to the left of area #K1. The standard slip ratio is preset to 5%. Therefore, in area #K1, the slip ratio can be changed and set to a value other than 5% by increasing or decreasing the numerical value from 5%.

When the worker selects and confirms "return" on the setting screen K-1 or K-2, the screen returns to the display screen shown in Fig. 10B.

### (L. Work state storage setting)

When the worker operates the select dial 284 to select and confirm area #L in Fig. 10C, a setting screen L-1 for work state storage is displayed on the display unit 28 as shown in Fig. 18A. On the setting screen L-1, the worker can further operate the select dial 284 to store eight types of settings from "work setting 1" to "work setting 8", as various settings for the rice transplanter 1 to be stored in the storage unit 100 (see Fig. 9).

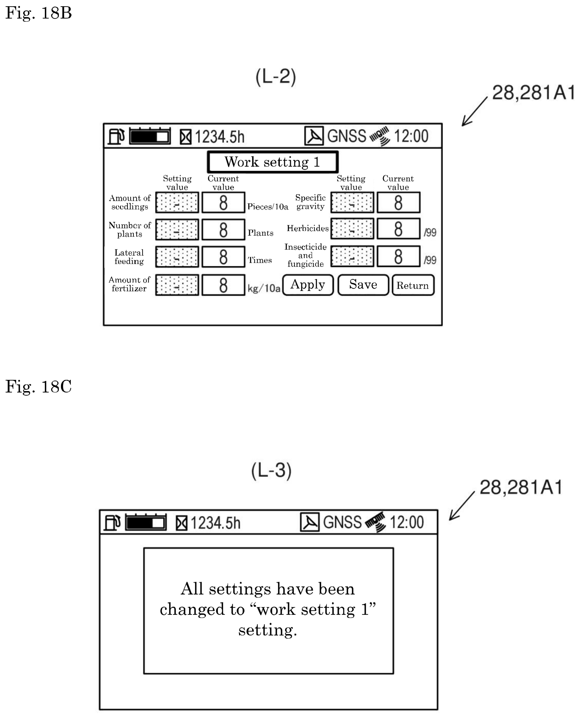

For example, when "work setting 1" is selected and confirmed on the setting screen L-1, a details screen L-2 for "work setting 1" is displayed on the display unit 28 as shown in Fig. 18B. The display screens and their transitions when "work setting 2" to "work setting 8" are selected and confirmed are the same as when "work setting 1" is selected and confirmed, and therefore the description thereof will be omitted.

On the details screen L-2, it is possible to set the amount of seedlings, the number of plants, the number of lateral feedings, the amount of fertilizer, the specific gravity of fertilizer, the amount of herbicide to be sprayed, and the amount of insecticide and fungicide to be sprayed. For example, when the worker operates the select dial 284 to select and confirm the "current value" of the "amount of seedlings", the value of the "amount of seedlings" can be input. The same applies to other items such as the number of plants. When the worker operates the select dial 284 to select and confirm "apply" or "save", the display screen of the display unit 28 transitions to a confirmation screen L-3 shown in Fig. 18C. The confirmation screen L-3 displays a message that the settings for "work settings 1" have been changed. The value input in the "current value" field is then stored as the "setting value". Therefore, next, when the details screen L-2 in Fig. 18B is displayed, the value previously input in the "current value" will be displayed in the "setting value" on the details screen L-2. The confirmation screen L-3 is displayed for a few seconds, after which the screen automatically returns to the details screen L-2. When the worker selects and confirms "return" on the details screen L-2, the screen returns to the display screen shown in Fig. 18A.

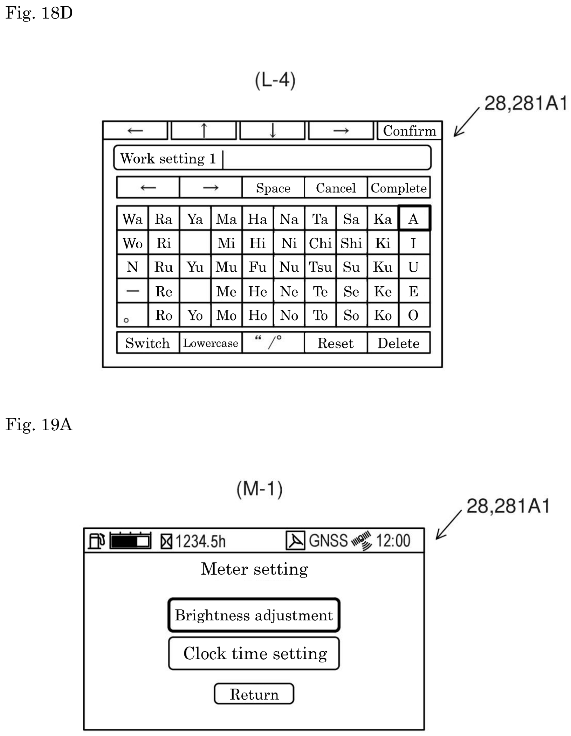

Furthermore, when the worker operates the select dial 284 on the details screen L-2 to select and confirm "work setting 1", an input screen L-4 shown in Fig. 18D is displayed on the display unit 28. On the input screen L-4, the worker can operate the select dial 284 to select and confirm a predetermined character, thereby changing the name of "work setting 1". On the input screen L-4, when the worker selects and confirms "cancel" or "complete", the screen returns to the details screen L-2.

### (M. Meter setting)

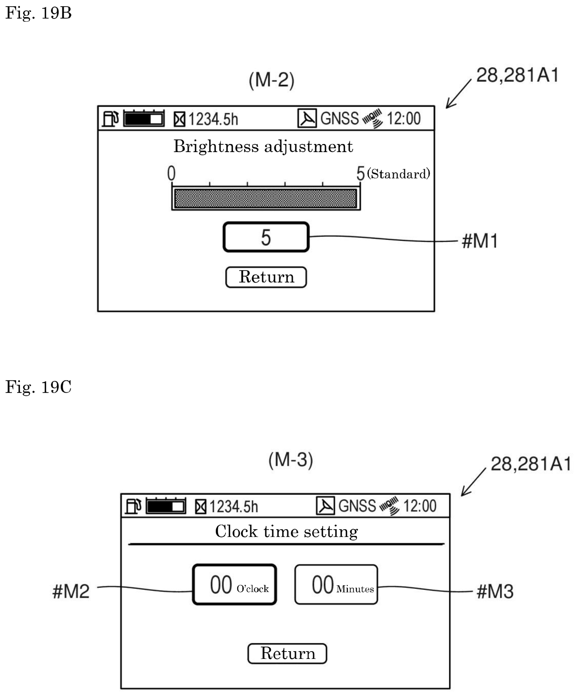

When the worker operates the select dial 284 to select and confirm area #M in Fig. 10C, a setting screen M-1 for a meter is displayed on the display unit 28, as shown in Fig. 19A. On the setting screen M-1, when the worker operates the select dial 284 to select and confirm "brightness adjustment", the display screen of the display unit 28 transitions to a setting screen M-2 for brightness shown in Fig. 19B. On the setting screen M-2, the worker can operate the select dial 284 to input the degree of brightness of the display on the display unit 28 in area #M1. The degree of brightness can be selected and input from 1 (dark) to 5 (bright).

On the other hand, when the worker operates the select dial 284 to select and confirm "clock time setting" on the setting screen M-1, the display screen of the display unit 28 transitions to a setting screen M-3 for clock time shown in Fig. 19C. On setting screen M-3, the worker can operate the select dial 284 to input "o'clock" in area #M2 and "minutes" in area #M3.

When the worker selects and confirms "return" on the setting screen M-2 or M-3, the display screen of the display unit 28 returns to the setting screen M-1 for the meter shown in Fig. 19A. When the worker selects and confirms "return" on the setting screen M-1, the display screen of the display unit 28 returns to the display screen shown in Fig. 10C.

### (N. Straight-line assist setting)

### <<Steering sensitivity adjustment>>

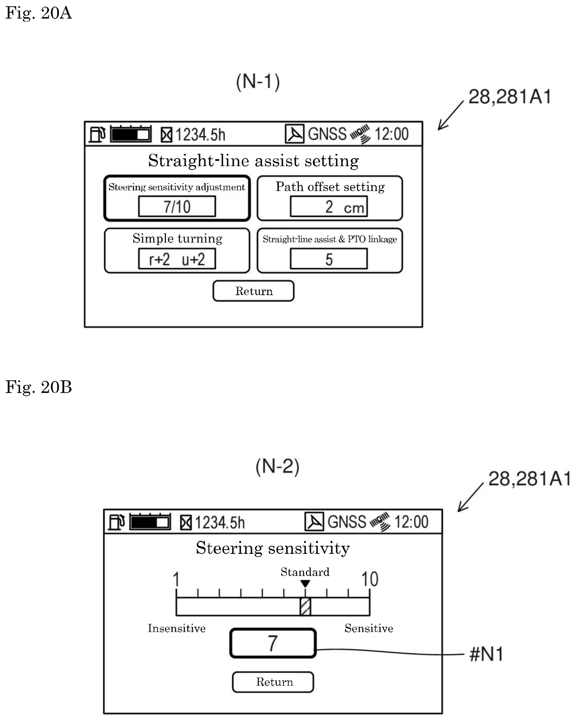

When the worker operates the select dial 284 to select and confirm area #N in Fig. 10C, a setting screen N-1 for straight-line assist is displayed on the display unit 28, as shown in Fig. 20A. When the worker operates the select dial 284 to select and confirm "steering sensitivity adjustment" on the setting screen N-1, the display screen of the display unit 28 transitions to a setting screen N-2 for steering sensitivity shown in Fig. 20B. On the setting screen N-2, the worker can operate the select dial 284 to input the steering sensitivity in area #N1. The steering sensitivity can be selected and input between 1 (insensitive) and 10 (sensitive). Note that the setting screen N-2 can also be displayed on the display unit 28 by long-pressing the AUTO button 2911 shown in Figs. 6 and 7 for one second or more.

For example, when automatic traveling is performed using the straight-line assist function in deep or sticky fields, straight-line stability can be improved by setting the steering sensitivity to the sensitive side. Furthermore, when automatic traveling is performed using the straight-line assist function in shallow or soft fields, for example, straight-line stability can be improved by setting the steering sensitivity to the insensitive side.

### <<Path offset adjustment>>

When the worker operates the select dial 284 on the setting screen N-1 to select and confirm "path offset setting", the display screen of the display unit 28 transitions to a setting screen N-3 for path offset shown in Fig. 20C. On the setting screen N-3, the worker can operate the select dial 284 to input the path offset amount in area #N2. The path offset amount refers to the shift amount (cm) of the rice transplanter 1 in the field that corresponds to the shift of the reference line when the left button 2914 or the right button 2915 shown in Fig. 7 is pressed once. The path offset amount can be selected and input between 1 (small) and 10 (large).

### <<Simple turning setting>>

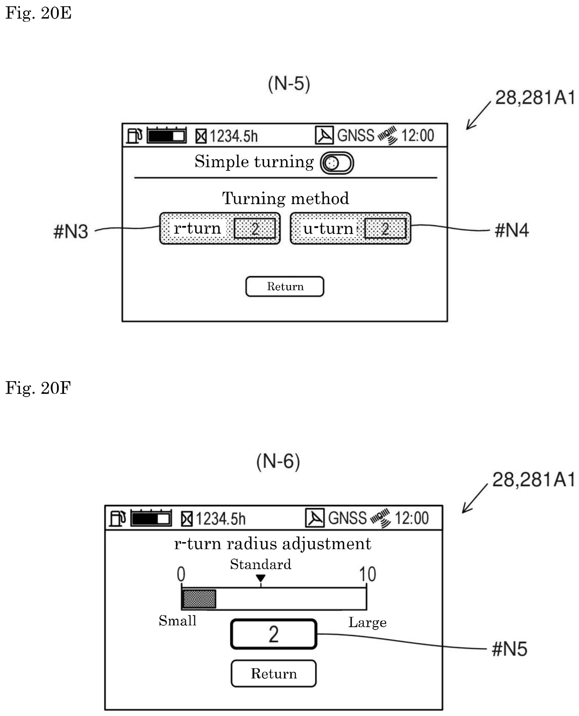

When the worker operates the select dial 284 to select and confirm "simple turning" on the setting screen N-1, the display screen of the display unit 28 transitions to a setting screen N-4 for simple turning shown in Fig. 20D. On setting screen N-4, when the worker operates the select dial 284 to turn on "simple turning", the display screen of the display unit 28 can then be transitioned to a setting screen for the turning radius of an r-turn or a u-turn by selecting area #N3 or area #N4. On the other hand, on the setting screen N-4, when the worker operates the select dial 284 to turn off "simple turning", a screen N-5 shown in Fig. 20E is displayed. On the screen N-5, areas #N3 and #N4 are displayed in a grayed out manner and cannot be selected.

On the setting screen N-4 in Fig. 20D, when area #N3 is selected and confirmed, the display screen of the display unit 28 transitions to an adjustment screen N-6 for an r-turn radius, as shown in Fig. 20F. On the adjustment screen N-6, the worker can operate the select dial 284 to input the size of the turning radius in the case of an r-turn in area #N5. The size of the turning radius for the r-turn can be selected and input between 1 (small) and 10 (large).

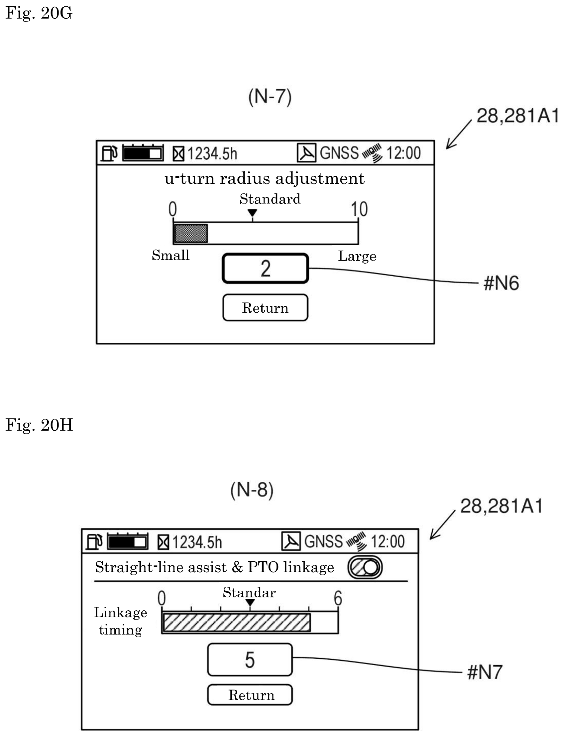

On the setting screen N-4 in Fig. 20D, when area #N4 is selected and confirmed, the display screen of the display unit 28 transitions to an adjustment screen N-7 for a u-turn radius, as shown in Fig. 20G. On the adjustment screen N-7, the worker can operate the select dial 284 to input the size of the turning radius in the case of a u-turn in area #N6. The size of the turning radius for the u-turn can be selected and input between 1 (small) and 10 (large).

### <<Straight-line assist & PTO linkage setting>>

On the setting screen N-1, when the worker operates the select dial 284 to select and confirm "straight-line assist & PTO linkage setting", the display screen of the display unit 28 transitions to a setting screen N-8 for straight-line assist & PTO linkage shown in Fig. 20H. The straight-line assist & PTO linkage refers to a function that links the rice transplanter 1's turning (for example, healthy turn) with automatic straight-line driving. In the following, "straight-line assist & PTO linkage" may be abbreviated to "straight-line assist linkage".

On the setting screen N-8, when the worker operates the select dial 284 to turn on "straight-line assist & PTO linkage", it becomes possible to input a timing of linkage in area #N7. Here, the timing of linkage refers to the timing at which the rice transplanter 1 starts automatic traveling after the rice transplanter 1 has ended turning. The above timing of the linkage can be set to one of six stages (for example, 6 m). For example, when the above timing of the linkage is set to "5", after the rice transplanter 1 has ended turning, the rice transplanter 1 will start automatic traveling after traveling 5 m.

When the worker selects and confirms "return" on each of the screens N-2 to N-8 shown above, the display screen of the display unit 28 returns to the setting screen N-1 shown in Fig. 20A. Furthermore, when the worker selects and confirms "return" on the setting screen N-1, the display screen of the display unit 28 returns to the display screen shown in Fig. 10C.

The steering sensitivity, the path offset amount, the turning radius, and the linkage timing set above will be displayed together in the selection frames for "steering sensitivity adjustment", "path offset amount setting", "simple turning", and "straight-line assist & PTO linkage" the next time the setting screen N-1 is displayed.

### (O. Fertilization setting)

### <<Constant fertilization>>

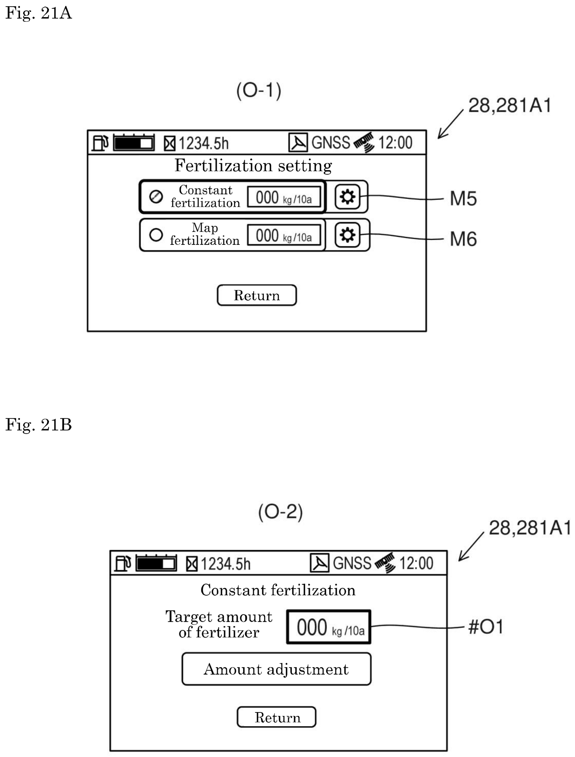

When the worker operates the select dial 284 to select and confirm area #O in Fig. 10C, a setting screen O-1 for fertilization is displayed on the display unit 28, as shown in Fig. 21A. On the setting screen O-1, when the worker selects and confirms "constant fertilization", the selection frame moves to a setting mark M5 on the right side thereof. When the worker presses the select dial 284 in a state in which the selection frame is located at the setting mark M5, a detailed setting screen O-2 for constant fertilization is displayed on the display unit 28 as shown in Fig. 21B.

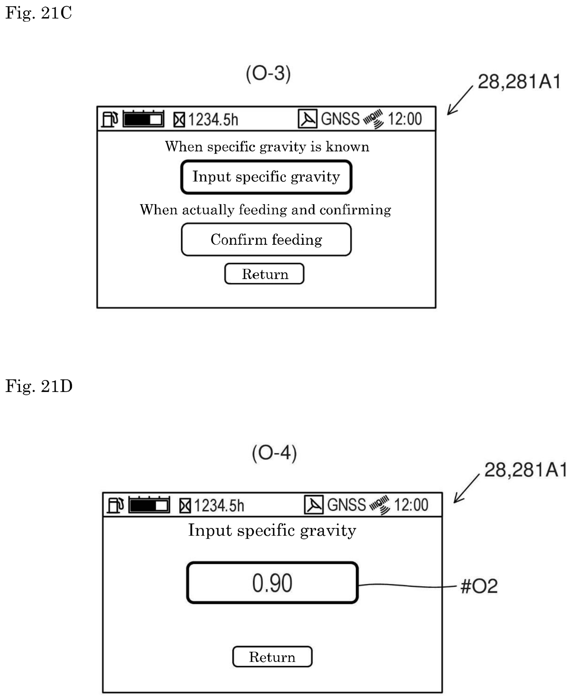

On the detailed setting screen O-2, the worker can set a target amount of fertilizer per unit area by operating the select dial 284 in area #O1. Here, the target amount of fertilizer can take different values depending on the fertilizer used (particularly the specific gravity). Therefore, for example, when changing the fertilizer to be used, it is necessary to set the specific gravity of the fertilizer in order to correctly calculate the target amount of fertilizer. When setting the specific gravity of the fertilizer, the worker operates the select dial 284 on the detailed setting screen O-2 to select and confirm "amount adjustment". Then, the display screen of the display unit 28 transitions to a selection screen O-3 shown in Fig. 21C.

On the selection screen O-3, when the worker operates the select dial 284 to select and confirm "input specific gravity", an input screen O-4 shown in Fig. 21D is displayed. When the specific gravity of the fertilizer to be used is known in advance, the worker can input the specific gravity of the fertilizer by operating the select dial 284 in area #O2 of the input screen O-4.

The above-mentioned screens O-1 to O-4 have a hierarchical structure, and when the worker selects and confirms "return" on each screen, the display screen of the display unit 28 returns to the screen one level above (before input).

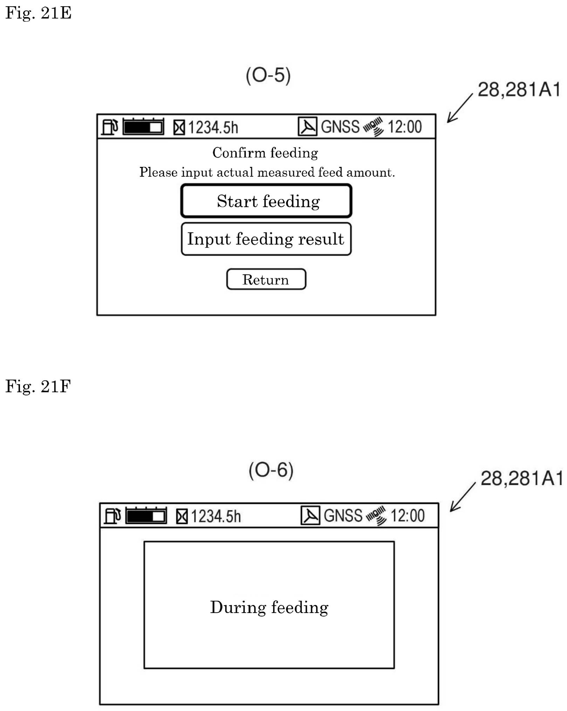

On the other hand, when the worker operates the select dial 284 to select and confirm "confirm feeding" on the selection screen O-3, a setting screen O-5 shown in Fig. 21E is displayed. The confirming feeding refers to driving only the fertilizer applicator 5 without traveling the rice transplanter 1 to feed fertilizer and confirm the specific gravity. Specifically, on the setting screen O-5, when the worker operates the select dial 284 to select and confirm "start feeding", the fertilizer applicator 5 is driven and fertilizer is fed. At the same time, a screen indicating that fertilizer is being fed is displayed on the display unit 28, as shown in Fig. 21F. When the predetermined amount of fertilizer has been fed, the display screen of the display unit 28 returns to the setting screen O-5 shown in Fig. 21E.

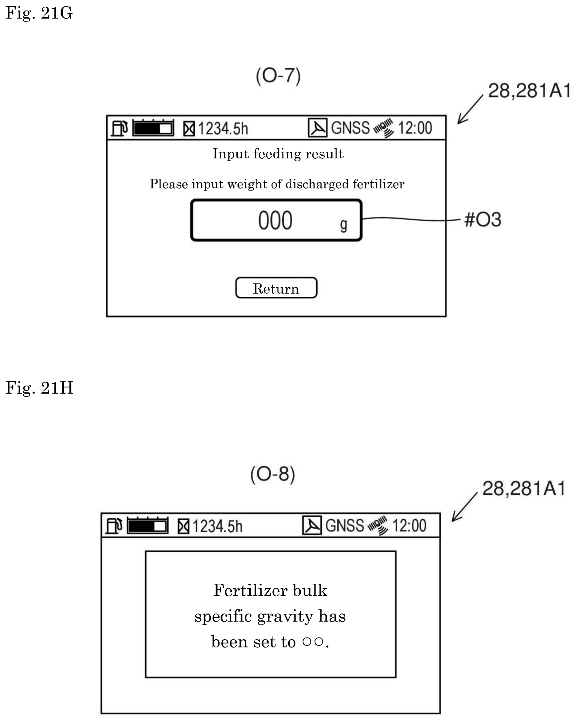

On the setting screen O-5, when the worker operates the select dial 284 to select and confirm "input feeding result", the display screen of the display unit 28 transitions to an input screen O-7 shown in Fig. 21G. The worker can input the measured weight of the fertilizer by operating the select dial 284 in area #O3 of the input screen O-7. Once the input is completed, the control unit 90 calculates the specific gravity of the fertilizer based on the weight and the volume (predetermined amount) of the fertilizer. Then, as shown in Fig. 21H, a screen O-8 is displayed to inform the user that the specific gravity of the fertilizer has been set to the value obtained by the calculation.

Even when the specific gravity is set by either inputting the specific gravity or by confirming the feeding, the target amount of fertilizer per predetermined area is calculated by the control unit 90 based on the set specific gravity and displayed on the setting screens O-1 and O-2.

Similarly to the above-mentioned screens O-1 to O-4, the screens O-1 to O-3, O-5, and O-7 also have a hierarchical structure, and when the worker selects and confirms "return" on each screen, the display screen of the display unit 28 returns to the screen one level above (before input).

### <<Map fertilization>>

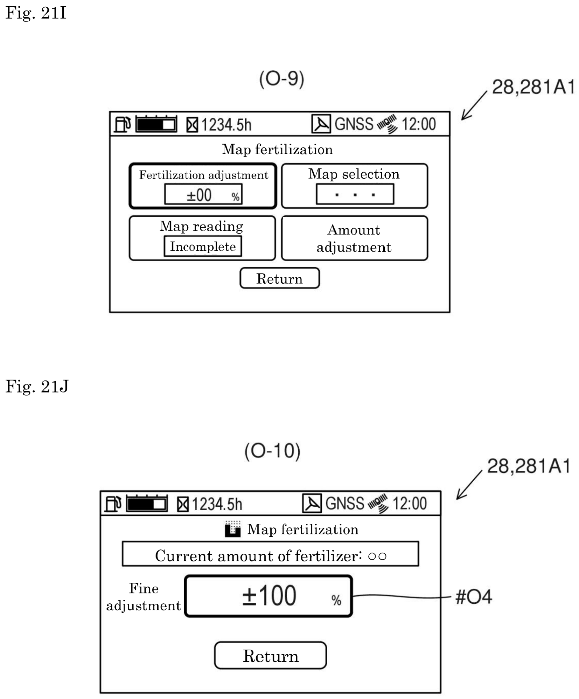

On the setting screen O-1 shown in Fig. 21A, when the worker selects and confirms "map fertilization", the selection frame moves to a setting mark M6 on the right side thereof. When the worker presses the select dial 284 in a state in which the selection frame is located at the setting mark M6, a detailed setting screen O-9 for map fertilization is displayed on the display unit 28 as shown in Fig. 21I.

### [Fertilization adjustment]

On the detailed setting screen O-9, when the worker operates the select dial 284 to select and confirm "fertilization adjustment", the display screen of the display unit 28 transitions to an input screen O-10 shown in Fig. 21J. On the input screen O-10, inputs can be made to finely adjust the amount of fertilizer to be applied in map fertilization. For example, by operating the select dial 284 in area #O4 of the setting screen O-10, the worker can input an amount of fertilizer that is less than the reference (e.g., 95%) or an amount of fertilizer that is greater than the reference (e.g., 105%), with the amount of fertilizer defined in the current fertilization map being the reference (100%).

On the input screen O-10, when the worker selects and confirms "return", the display screen of the display unit 28 returns to the detailed setting screen O-9 shown in Fig. 21I. On the detailed setting screen O-9, the "fertilization adjustment" field also displays the adjustment value of the amount of fertilizer input on the setting screen O-10. On the detailed setting screen O-9, when the worker selects and confirms "return", the display screen of the display unit 28 returns to the setting screen O-1 shown in Fig. 21A.

### [Map selection]

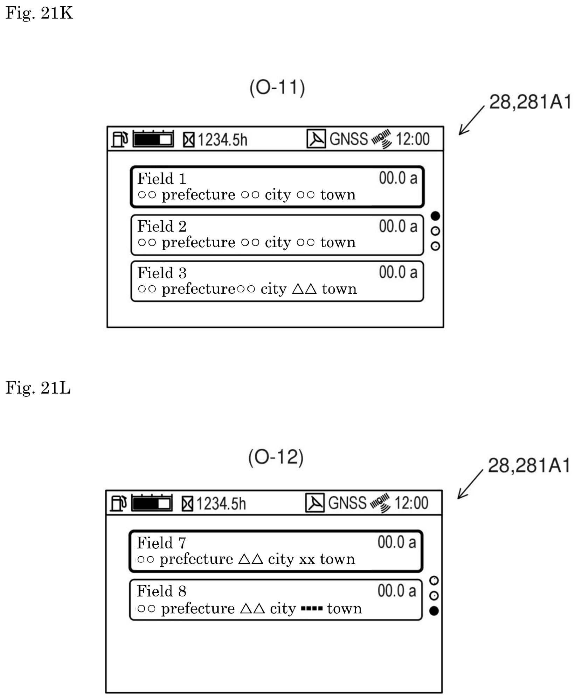

On the detailed setting screen O-9, when the worker operates the select dial 284 to select and confirm "map selection", the display screen of the display unit 28 transitions to a screen O-11 shown in Fig. 21K. The screen O-11 displays a list of fertilization maps, in other words, a list of the names of the fertilization maps (here, for example, the field names and addresses). The data of each fertilization map (data on the amount of fertilizer for each point) is stored in the storage unit 100 (see Fig. 9).

In the present embodiment, the names of the fertilization maps are displayed in groups of three on one page. For example, it is assumed that fertilization maps for eight fields are stored in the storage unit 100. Fig. 21K shows a display screen O-11 of the first page of the list of fertilization maps (fields 1 to 3), and Fig. 21L shows a display screen O-12 of the third page. For convenience, the display screen of the second page of the list of fertilization maps (fields 4 to 6) is omitted from the illustration. By operating the select dial 284, the worker can display a list of fertilization maps on the display unit 28 in page order.

The worker operates the select dial 284 to select and confirm a desired fertilization map from the list of fertilization maps, thereby completing the selection of the fertilization map. When the selection of the fertilization map is completed, the display screen of the display unit 28 returns to the detailed setting screen O-9 shown in Fig. 21I. On the detailed setting screen O-9, the name of the selected fertilization map is also displayed in the "map selection" field.

### [Map reading]

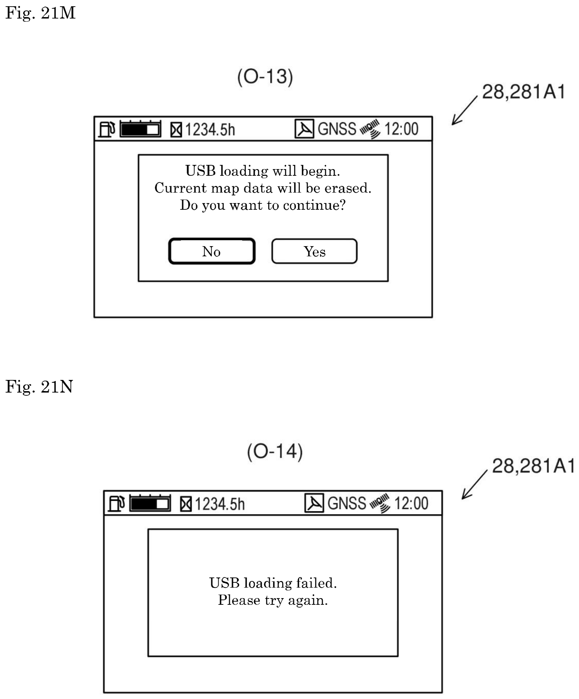

On the detailed setting screen O-9, when the worker operates the select dial 284 to select and confirm "map reading", the display screen of the display unit 28 transitions to a screen O-13 shown in Fig. 21M. For example, when the fertilization map cannot be read in the rice transplanter 1 (storage unit 100) (incomplete), or when the desired fertilization map does not exist and cannot be selected in "map selection", it is necessary to read new data of the fertilization map from outside. In such cases, "map reading" is utilized.

When reading the data of the fertilization map, the worker connects a portable memory (for example, a USB (registered trademark) memory) to a predetermined connection port of the rice transplanter 1. Then, on the screen O-13, the worker operates the select dial 284 to select and confirm "Yes". This causes the data of the fertilization map stored in the memory to be read. Note that when new data is read, the existing map data will be overwritten and erased. The read data may be additionally stored without overwriting the existing data.

Furthermore, when the worker selects "Yes" on the screen O-13 to instruct the data to be read, and then the data reading fails for some reason, the screen O-14 shown in Fig. 21N is displayed, instructing the worker to read the data again. After the screen 0-14 is displayed, the screen returns to display of the screen O-13. Therefore, the worker can select "Yes" again on the screen O-13 and confirm the selection to execute the reading of the above data again. When the reading of the above data is completed, the display screen of the display unit 28 returns to the detailed setting screen O-9 shown in Fig. 21I.

On the other hand, on the screen O-13, when the worker operates the select dial 284 to select and confirm "No", the reading of data is stopped. Thereafter, the display screen of the display unit 28 returns to the detailed setting screen O-9 shown in Fig. 21I.

### [Amount adjustment]

On the detailed setting screen O-9, when the worker operates the select dial 284 to select and confirm "amount adjustment", the display screen of the display unit 28 transitions to the selection screen O-3 shown in Fig. 21C. In map fertilization, the specific gravity of the fertilizer can be input using the same procedure as in the case of constant fertilization.

### (P. Herbicide sprayer, Q. Insecticide and fungicide sprayer)

When the worker operates the select dial 284 to select and confirm area #P in Fig. 10C, a setting screen for the herbicide sprayer is displayed on the display unit 28. Furthermore, when the worker operates the select dial 284 to select and confirm area #Q in Fig. 10C, a setting screen for the insecticide and fungicide sprayer is displayed on the display unit 28. The display format of the setting screen for the herbicide sprayer is the same as that of the setting screen for the insecticide and fungicide sprayer, except for the spray target. Therefore, the following description will be given using the setting screen for an insecticide and fungicide sprayer as a representative example.

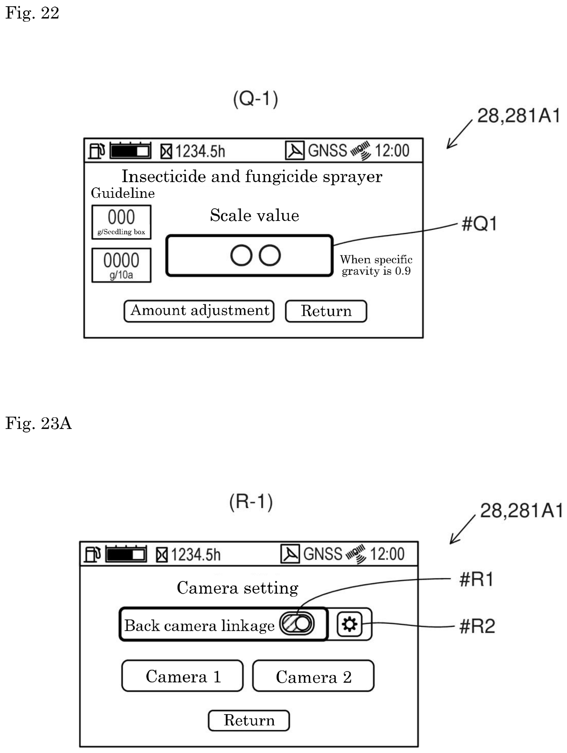

Fig. 22 shows a setting screen Q-1 for the insecticide and fungicide sprayer as a display screen of the display unit 28. In area #Q1 of the setting screen Q-1, the worker can operate the select dial 284 to input a scale value. The scale value is simply a dial value, for example, from 0 to 100. A scale value of 0 indicates the amount of spray of zero. A scale value of 100 indicates the maximum amount of spray. The control unit 90 calculates a guideline value that is determined according to the input scale value. The above guideline values are also displayed on the setting screen Q-1.

Here, the above guideline values are displayed in two types. One of the guideline values is the amount (g) of insecticide and fungicide per seedling box (per seedling mat) that is determined according to the input scale value. The other guideline value is the amount (g) of insecticide and fungicide per predetermined area (for example, 10 ares) that is determined according to the input scale value. The worker can easily ascertain the amount of insecticide and fungicide to be sprayed based on the two types of guideline values displayed on the setting screen Q-1.

On the setting screen Q-1, when the worker operates the select dial 284 to select and confirm "amount adjustment", a screen similar to the selection screen O-3 shown in Fig. 21C is displayed on the display unit 28. From then on, the screens O-4 to O-8 similar to those when setting the specific gravity of the fertilizer are selectively displayed. Therefore, the worker can set the specific gravity of the insecticide and fungicide to be used in the same manner as when setting the specific gravity of fertilizer.

On the setting screen Q-1, when the worker operates the select dial 284 to select and confirm "return", the display screen of the display unit 28 returns to the display screen shown in Fig. 10C. On the display screen shown in Fig. 10C, the scale value set on the setting screen Q-1 of Fig. 22 is also displayed within the "insecticide and fungicide sprayer" selection frame (in area #Q). Note that the set scale value for the herbicide sprayer is also displayed in the "herbicide sprayer" selection frame (in area #P) on the display screen shown in Fig. 10C.

### (R. Camera setting)

When the worker operates the select dial 284 to select and confirm area #R in Fig. 10D, a setting screen R-1 for the camera 110 (see Fig. 9) is displayed on the display unit 28, as shown in Fig. 23A. Here, as an example, it is assumed that two cameras 110 are optionally attached to the rice transplanter 1. The two cameras 110 are referred to as "camera 1" and "camera 2" on the setting screen R-1, for example.

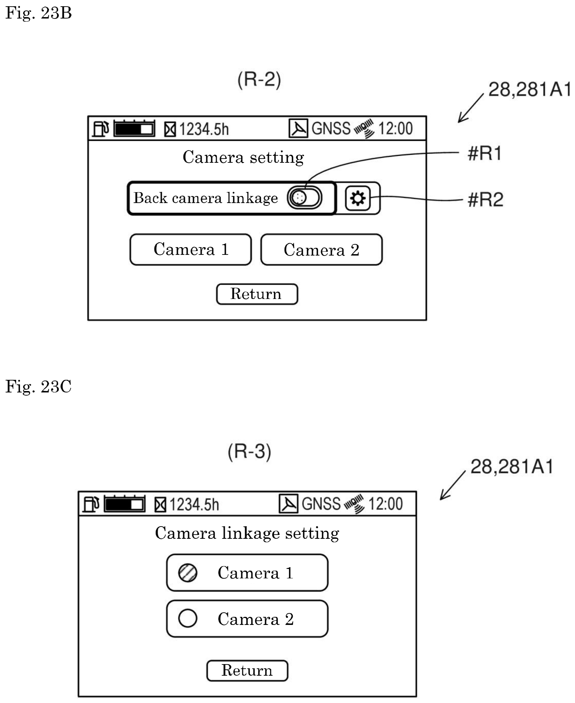

On the setting screen R-1, the worker can set on/off of the back camera linkage. The back camera linkage means that when the main shift lever 221 (see Fig. 2) is operated to the "reverse" position, an image captured by the camera 110 is displayed on the display unit 28 in conjunction with that operation. For example, Fig. 23A shows a state in which the back camera linkage is set to "on". In this state, when the worker operates the select dial 284 to select area #R1 in Fig. 23A and presses the select dial 284 once to confirm it, the back camera linkage is switched to "off". Fig. 23B shows a setting screen R-2 when the back camera linkage is set to "off". When the worker presses the select dial 284 again to confirm the selection in a state in which area #R1 is selected, the display screen of the display unit 28 switches from the setting screen R-2 to the setting screen R-1. That is, the back camera linkage can be switched to "on".

On the setting screen R-1, when the worker operates the select dial 284 to select area #R2 and presses the select dial 284 to confirm the selection, the display screen of the display unit 28 transitions to a setting screen R-3 shown in Fig. 23C. On the setting screen R-3, the worker can operate the select dial 284 to select "camera 1" or "camera 2" and confirm the selection, thereby selecting the camera that will capture the image to be displayed via the back camera linkage. In the example of Fig. 23C, this indicates that "camera 1" is selected.

On the setting screen R-3 in Fig. 23C, when the worker operates the select dial 284 to select and confirm "return", the display screen of the display unit 28 returns to the setting screen R-1 shown in Fig. 23A. Furthermore, on the setting screen R-1 in Fig. 23A and the setting screen R-2 in Fig. 23B, when the worker operates the select dial 284 to select and confirm "return", the display screen of the display unit 28 returns to the display screen shown in Fig. 10D.

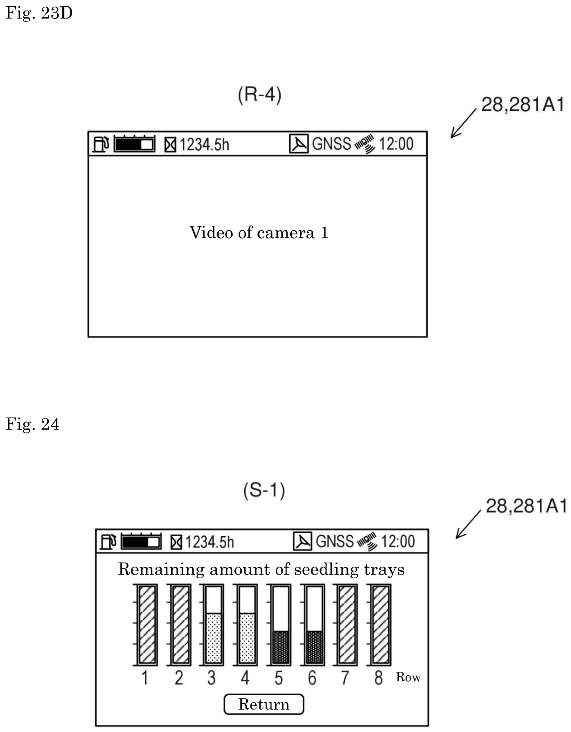

Furthermore, on the setting screen R-1 or R-2, when the worker operates the select dial 284 to select and confirm "camera 1" or "camera 2", the display screen of the display unit 28 transitions to a display screen R-4 shown in Fig. 23D. On the display screen R-4, the current image (moving image) being captured by the selected camera ("camera 1" in the example of Fig. 23D) is displayed for a predetermined time. When a predetermined time has elapsed since the image was displayed, the display screen of the display unit 28 returns to the setting screen R-1 or R-2.

### (S. Remaining amount of seedlings on seedling tray)

When the worker operates the select dial 284 to select and confirm area #S in Fig. 10D, the screen S-1 shown in Fig. 24 is displayed on the display unit 28. On the screen S-1, the remaining amount of seedling mats on the seedling tray for 8 rows is displayed for each row as the remaining amount of seedlings on the seedling tray. The remaining amount of seedlings on the seedling tray can be determined by the control unit 90 based on the detection result of the rotation speed of the star wheel provided on the seedling tray, and can be displayed on the display unit 28.

The remaining amount of seedlings on the seedling tray displayed for each row is displayed in a different color depending on the remaining amount. For example, when the remaining amount of seedling mats is 3/4 or more of the maximum number of seedling mats that can be placed on the seedling tray (e.g., 2.2 pieces), the remaining amount of seedlings on the seedling tray is displayed in green, when the remaining amount of seedling mats is 1/4 or more and less than 3/4 of the maximum number of seedling mats, the remaining amount of seedlings on the seedling tray is displayed in yellow, and when the remaining amount of seedling mats is less than 1/4 of the maximum number of seedling mats, the remaining amount of seedlings on the seedling tray is displayed in red. The above display colors are merely examples and can be changed as appropriate.

On the display screen S-1 shown in Fig. 24, when the worker operates the select dial 284 to select and confirm "return", the display screen of the display unit 28 returns to the display screen shown in Fig. 10D.

As described above, the display screen of the display unit 28 can transition between the home screen (see Figs. 5 and 10A) and the setting change screen (Figs. 10B to 10D and Figs. 13A to 24). Accordingly, for example, while the rice transplanter 1 is working, the home screen can be displayed on the display unit 28, allowing the worker to simultaneously recognize the measurement information P1 and the setting information P2. On the other hand, when changing settings, the setting change screen is displayed on the display unit 28 in response to the worker's operation of the input unit 50 (select dial 284), allowing the worker to input or change various settings on the setting change screen.

### <6. Display of warning on display unit>

If any error is detected while the rice transplanter 1 is working or when changing settings, warning information is output to the display unit 28. For example, when the control unit 90 determines that the number of seedling mats used may exceed the set number as the work progresses, a warning screen T-1 shown in Fig. 25A is displayed on the display unit 28. The warning screen T-1 is configured as a screen that displays warning information as a pop-up on the current display screen. In addition, a warning sound by a buzzer may be emitted along with the pop-up display of the warning information.

When a predetermined time has elapsed since the warning screen T-1 was displayed, or when some operation is performed using the input unit 50 (for example, stopping the buzzer when the buzzer sounds), the pop-up display will disappear, and instead the warning information shown in Fig. 25A will be added and displayed somewhere on the current display screen. For example, as shown on the display screen T-2 in Fig. 25B, the warning information displayed on the warning screen T-1 in Fig. 25A is displayed at the bottom of the home screen (the area that displayed the page number). By displaying the warning information at the bottom of the display screen T-2, the worker looking at the display screen T-2 can confirm other display contents (e.g., measurement information, setting information) on the display screen T-2 (home screen) even while the warning information is being displayed. When the above error is resolved by changing the number of seedling mats set, the warning information displayed on the display screen T-2 will disappear.

### <7. Customizing display screen>

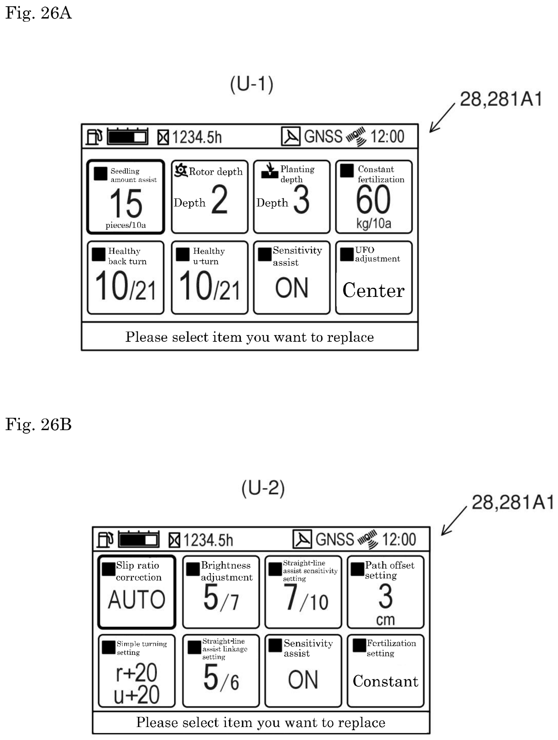

In the present embodiment, the home screen shown in Fig. 10A can be customized and displayed. For example, on the display screen shown in Fig. 10A, when the worker operates the select dial 284 to select area #B and long-presses the select dial 284, the display screen of the display unit 28 will transition from the display screen shown in Fig. 10A to a screen U-1 shown in Fig. 26A. On the screen U-1, a plurality of sets are displayed, each set consisting of a setting item to be displayed at the position of area #B in Fig. 10A and individual setting information corresponding to that setting item. The individual setting information includes information on the setting state (ON/OFF of the setting, etc.) in addition to the setting value of the setting item. The screen U-1 shows an example in which four sets of setting items and individual setting information are displayed side by side in the upper row and four sets are displayed side by side in the lower row. Hereinafter, the above set will also be referred to as an item set.

On the screen U-1, when the worker turns the select dial 284 to the right, the selection frame for the item set moves from left to right in the upper row, and then moves from left to right in the lower row. Furthermore, when the worker turns the select dial 284 to the right, the display screen of the display unit 28 transitions from the screen U-1 in Fig. 26A to a screen U-2 shown in Fig. 26B. The screen U-2 shows an example in which, similarly to the screen U-1, four item sets are displayed side by side in the upper row and four item sets are also displayed side by side in the lower row.

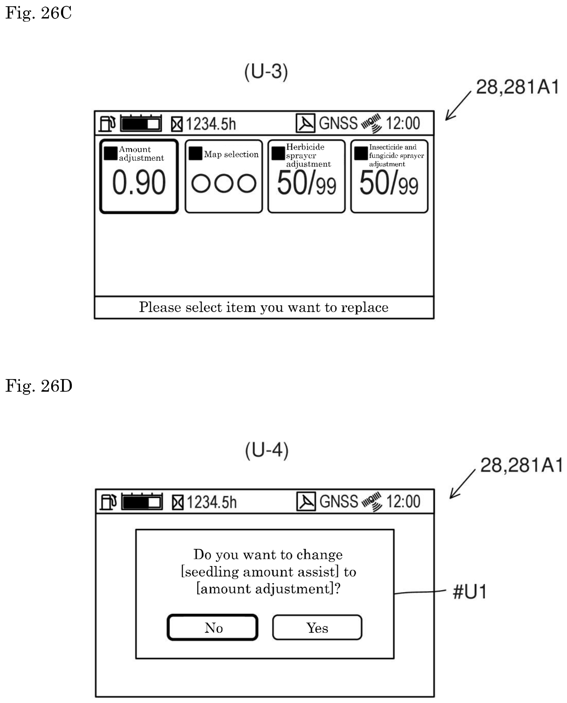

On the screen U-2, when the worker turns the select dial 284 to the right, the selection frame for the item set moves from left to right in the upper row, and then moves from left to right in the lower row. Furthermore, when the worker turns the select dial 284 to the right, the display screen of the display unit 28 transitions from the screen U-2 in Fig. 26B to a screen U-3 shown in Fig. 26C. The screen U-3 shows an example in which four item sets are displayed side by side only in the upper row.

For example, on the screen U-3, when the worker presses (short-presses) the select dial 284 in a state in which the selection frame is located on a predetermined item set, "amount adjustment", the display screen of the display unit 28 transitions from the screen U-3 to a screen U-4 shown in Fig. 26D. The screen U-4 shows a state in which a confirmation screen #U1 is displayed as a pop-up on the screen U-3. The confirmation screen #U1 is a screen for confirming with the worker whether "seedling amount assist" may be changed to "amount adjustment".

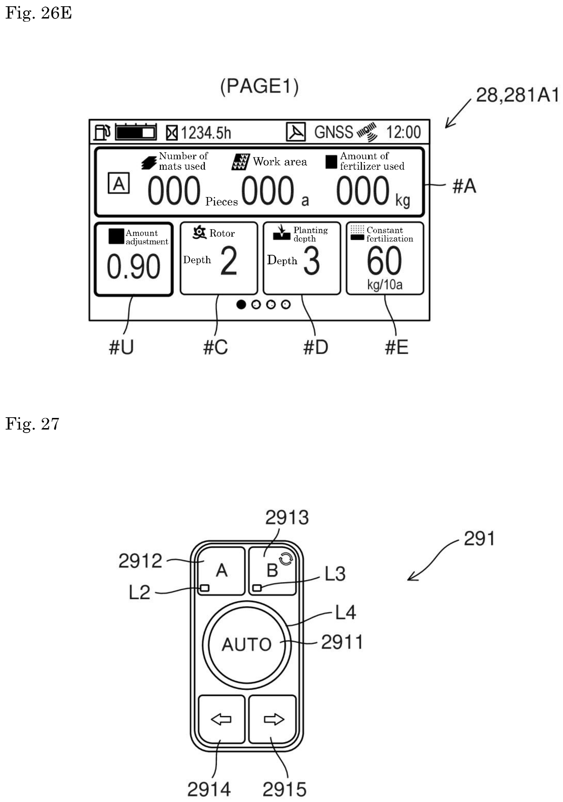

On the screen U-4, when the worker operates the select dial 284 to select and confirm "Yes", the display screen shown in Fig. 26E is displayed as a new home screen instead of the home screen shown in Fig. 10A. On the display screen shown in Fig. 26E, area #B that displayed "seedling amount assist" is replaced with area #U that displays "amount adjustment". Next, on the home screen, when the worker operates the select dial 284 to select and confirm area #U, the display screen of the display unit 28 transitions directly to a screen for setting the amount adjustment, specifically, the selection screen O-3 shown in Fig. 21C. That is, area #U functions as a shortcut key.

On the home screen, by selecting another area (for example, any of areas #C to #E) by long-pressing the select dial 284 and performing the same operation as above (selecting an item set), another item set can be displayed in place of the other area.

As described above, a predetermined setting item (e.g., "seedling amount assist") included in the setting information displayed on the home screen (the same as setting information P2 in Fig. 5) can be displayed in place of another setting item (e.g., "amount adjustment"). In this way, the worker can freely select setting items and create (customize) the home screen according to the worker's preferences, the manner in which the rice transplanter 1 is used, the work content, the work location, etc. Therefore, in terms of improving convenience, it is desirable to have a configuration in which the home screen can be customized as described above.

In order to realize the above-described screen transitions on the display unit 28, the rice transplanter 1 needs to be provided with a means for the worker to input instructions for the screen transitions. In this regard, it is desirable that the rice transplanter 1 includes the input unit 50 that receives at least one of the input of settings and the selection of setting items by the worker. Specifically, the input unit 50 includes at least one of the press button 281B and the select dial 284.

### <8. Modification examples of operation unit>

Next, modification examples of the first operation unit 291 and the second operation unit 292 that constitute the operation unit 29 described above will be described.

### (8-1. Modification example of first operation unit)

Fig. 27 is a front view showing still another configuration of the first operation unit 291. In the first operation unit 291 shown in Fig. 27, the positional relationship of the A button 2912, the B button 2913, and the pass offset buttons (the left button 2914 and the right button 2915) relative to the AUTO button 2911 is the opposite of that in the first operation unit 291 shown in Fig. 7. That is, in first operation unit 291 shown in Fig. 27, the A button 2912 and the B button 2913 are disposed above the AUTO button 2911 when viewed from the front. Furthermore, the left button 2914 and the right button 2915 are disposed below the AUTO button 2911 when viewed from the front. The configuration of Fig. 7 and the configuration of Fig. 27 have in common that the A button 2912 and the B button 2913 are disposed side by side in the left-right direction, and the left button 2914 and the right button 2915 are disposed side by side in the left-right direction.

The A button 2912 and the B button 2913 are pressed by the operator only when creating a reference line to be used when performing automatic traveling (automatic steering only for straight ahead). Therefore, the A button 2912 and the B button 2913 are basically operated only once for each field in which work is to be performed.

On the other hand, the left button 2914 and the right button 2915 are pressed by the operator when the travel path of the rice transplanter 1 deviates from the reference line during work. Therefore, it is expected that the frequency of operation of the left button 2914 and the right button 2915 will be higher than the frequency of operation of the A button 2912 and the B button 2913.

As shown in Fig. 3, the lower end of the first operation unit 291 is located closer to the rear of the vehicle than the upper end of the first operation unit 291, that is, closer to the driver's seat 21. Therefore, the closer to the lower end of the first operation unit 291 a button is, the easier it is for an operator seated in the driver's seat 21 to press and operate the button. In particular, while the rice transplanter 1 is traveling, the closer the button is to the driver's seat 21, the easier it is for the operator to press and operate the button.

Therefore, as shown in Fig. 27, in the first operation unit 291, the left button 2914 and the right button 2915, which are operated relatively frequently, are located below the A button 2912 and the B button 2913, which are operated relatively less frequently, and thus the left button 2914 and the right button 2915 can be located closer to the driver's seat 21a, thereby improving operability for the operator. Improved operability also leads to improved convenience.

### (8-2. Modification example of second operation unit)

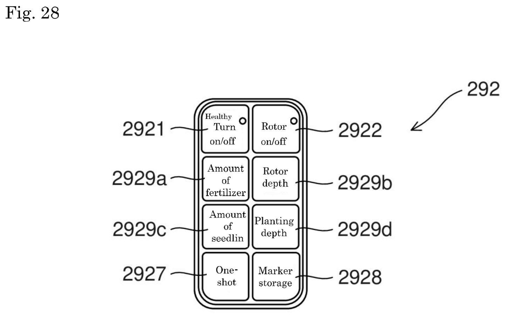

Fig. 28 is a front view showing another configuration of the second operation unit 292. The second operation unit 292 shown in Fig. 28 has the same configuration as that shown in Fig. 8, except that the planting depth "shallow" setting button 2923, the planting depth "deep" setting button 2924, the rotor "shallow" setting button 2925, and the rotor "deep" setting button 2926 shown in Fig. 8 have been changed to a fertilizer amount setting button 2929a, a rotor depth setting button 2929b, a seedling amount setting button 2929c, and a planting depth setting button 2929d, respectively. The differences from the configuration in Fig. 8 will be described below.

### <<8-2-1. Rotor depth setting button>>

The rotor depth setting button 2929b is a button for directly transitioning the display screen of the display unit 28 to a setting screen for the rotor depth. That is, when the operator presses the rotor depth setting button 2929b, the display screen of the display unit 28 transitions from, for example, the home screen shown in Fig. 5 to a setting screen for the rotor depth (not shown). In this case, the operator can immediately set the rotor depth on the setting screen. As described above, the setting screen for the rotor depth has the same display format as the setting screen D-1 for the planting depth (see Fig. 14) except for the setting items.

The rotor depth setting button 2929b may be a button for adjusting (setting) the height (depth) of the rotor 33. For example, each time the operator presses the rotor depth setting button 2929b once, the depth of the rotor 33 may be set shallower (the height may be set higher) by a predetermined amount. Furthermore, when the depth of the rotor 33 is set to the shallowest setting, if the operator presses the rotor depth setting button 2929b again, the depth of the rotor 33 will return to the deepest setting, and thereafter, each time the rotor depth setting button 2929b is pressed once, the depth of the rotor 33 may be set shallower by a predetermined amount.

### <<8-2-2. Planting depth setting button>>

The planting depth setting button 2929d is a button for directly transitioning the display screen of the display unit 28 to a setting screen for the planting depth. That is, when the operator presses the planting depth setting button 2929d, the display screen of the display unit 28 transitions from, for example, the home screen shown in Fig. 5 to the setting screen D-1 for the planting depth (see Fig. 14). In this case, the operator can immediately set the planting depth on the setting screen D-1 for the planting depth.

The planting depth setting button 2929d may be a button for adjusting (setting) the planting depth. For example, each time the operator presses the planting depth setting button 2929d once, the planting depth may be set deeper by a predetermined amount. Also, when the planting depth is set to the maximum, if the operator presses the planting depth setting button 2929d again, the planting depth will return to the minimum setting, and thereafter, each time the planting depth setting button 2929d is pressed once, the planting depth may be set deeper by a predetermined amount.

### <<8-2-3. Fertilizer amount setting button>>

The fertilizer amount setting button 2929a is a button for directly transitioning the display screen of the display unit 28 from, for example, the home screen shown in Fig. 5 to a setting screen for fertilization. For example, on the setting screen O-1 shown in Fig. 21A, when the operator presses the fertilizer amount setting button 2929a once in a state in which "constant fertilization" is selected and set, the display screen of the display unit 28 switches from the home screen shown in Fig. 5 to the detailed setting screen O-2 for constant fertilization shown in Fig. 21B. This allows the operator to immediately set or change the target amount of fertilizer on the detailed setting screen O-2.

On the detailed setting screen O-2, when the operator presses the fertilizer amount setting button 2929a again, the display screen of the display unit 28 switches from the detailed setting screen O-2 to the setting screen O-1 shown in Fig. 21A. Thereafter, each time the operator presses the fertilizer amount setting button 2929a, the display screen of the display unit 28 is alternately switched between the setting screen O-1 and the detailed setting screen O-2.

On the other hand, on the setting screen O-1 shown in Fig. 21A, when the operator presses the fertilizer amount setting button 2929a once in a state in which "map fertilization" is selected and set, the display screen of the display unit 28 switches from the home screen shown in Fig. 5 to the input screen O-10 shown in Fig. 21J. This allows the operator to immediately input fine adjustments to the amount of fertilizer to be applied in map fertilization on the input screen O-10.

On the input screen O-10, when the operator presses the fertilizer amount setting button 2929a again, the display screen of the display unit 28 switches from the input screen O-10 to the setting screen O-1 shown in Fig. 21A. On the setting screen O-1, when the operator presses the fertilizer amount setting button 2929a again, the display screen of the display unit 28 switches from the setting screen O-1 to the detailed setting screen O-9 for map fertilization shown in Fig. 21I. Thereafter, each time the operator presses the fertilizer amount setting button 2929a, the display screen of the display unit 28 switches in the following order: the detailed setting screen O-9, the input screen O-10, the setting screen O-1, the detailed setting screen O-9, and so on.

### <<8-2-4. Seedling amount setting button>>

The seedling amount setting button 2929c is a button for directly transitioning the display screen of the display unit 28 from, for example, the home screen shown in Fig. 5 to a setting screen for the amount of seedlings. For example, on the setting screen B-1 for the seedling amount assist mode shown in Fig. 13A, when the operator presses the seedling amount setting button 2929c once in a state in which "seedling amount assist mode" is selected and set, the display screen of the display unit 28 switches from the home screen shown in Fig. 5 to the detailed setting screen B-2 for the seedling amount assist mode shown in Fig. 13B. This allows the operator to immediately set or change the number of seedling mats per predetermined area on the detailed setting screen B-2.

On the detailed setting screen B-2, when the operator presses the seedling amount setting button 2929c again, the display screen of the display unit 28 switches from the detailed setting screen B-2 to the setting screen B-1 shown in Fig. 13A. Thereafter, each time the operator presses the seedling amount setting button 2929c, the display screen of the display unit 28 is alternately switched between the setting screen B-1 and the detailed setting screen B-2.

On the other hand, on the setting screen B-1 shown in Fig. 13A, when the operator presses the seedling amount setting button 2929c once in a state in which "vertical harvest amount designation mode" is selected and set, the display screen of the display unit 28 switches from the home screen shown in Fig. 5 to the detailed setting screen B-3 for the vertical harvest amount designation mode shown in Fig. 13C. This allows the operator to immediately input the vertical harvest amount of seedlings on the detailed setting screen B-3.

On the detailed setting screen B-3, when the operator presses the seedling amount setting button 2929c again, the display screen of the display unit 28 switches from the detailed setting screen B-3 to the setting screen B-1 shown in Fig. 13A. Thereafter, each time the operator presses the seedling amount setting button 2929c, the display screen of the display unit 28 is alternately switched between the setting screen B-1 and the detailed setting screen B-3.

In the present embodiment, as shown in Figs. 2 and 3, the display unit 28 and the operation unit 29 are supported by the support portion 60 and thereby are disposed to the side (right side) of the steering handle 22a. That is, the display unit 28 and the operation unit 29 are disposed in positions that are easily reachable by the operator seated in the driver's seat 21. This makes it easier for the operator to operate the display unit 28 and the operation unit 29.

Furthermore, the second operation unit 292 shown in Fig. 28 is configured by replacing some of the buttons of the second operation unit 292 shown in Fig. 8 (the planting depth "shallow" setting button 2923, the planting depth "deep" setting button 2924, the rotor "shallow" setting button 2925, and the rotor "deep" setting button 2926) with shortcut buttons (the fertilizer amount setting button 2929a, the rotor depth setting button 2929b, the seedling amount setting button 2929c, and the planting depth setting button 2929d). The above-mentioned shortcut button refers to a button that directly transitions the display screen of the display unit 28 from the home screen to a screen that displays a predetermined setting item (adjustment item).

In this way, by assigning some of the buttons on the second operation unit 292 to shortcut buttons, the operator can instantly switch the display screen of the display unit 28 to a page of a related item (in the above example, the setting screen for the amount of fertilizer or the amount of seedlings) by operating the shortcut button. Therefore, when displaying the page of related items on the display unit 28, the operator does not need to touch the display unit 28 a plurality of times. In this way, the number of operations required by the operator can be reduced, thereby improving convenience. Furthermore, the second operation unit 292 having the shortcut buttons is disposed in a position that is easy for the operator to operate, and thus the operability of the shortcut buttons is also ensured.

### <9. Supplement>

In the present embodiment, the rice transplanter 1 has been described as an example of a work vehicle, but the work vehicle is not limited to the rice transplanter 1. For example, the configuration described in the present embodiment can be applied to agricultural work vehicles such as tractors, combine harvesters, and seedling transplanters, civil engineering and construction work vehicles, and work vehicles such as snowplows.

### <10. Additional Notes>

The work vehicle described in the present embodiment can also be expressed as follows.

According to Additional Note (1), there is provided a work vehicle including a display unit, in which the display unit simultaneously displays measurement information measured as work progresses by the work vehicle and setting information about a setting of the work vehicle.

According to Additional Note (2), in the work vehicle according to Additional Note (1), the display unit displays the measurement information on one side of a display screen in one direction and the setting information on the other side.

According to Additional Note (3), in the work vehicle according to Additional Note (1) or (2), the measurement information includes individual measurement information that is measured for a plurality of measurement items.

According to Additional Note (4), in the work vehicle according to Additional Note (3), the plurality of measurement items include the number of seedling mats used in the work and a work area where the work was performed.

According to Additional Note (5), in the work vehicle according to any one of Additional Notes (1) to (4), the setting information includes individual setting information that is set for a plurality of setting items.

According to Additional Note (6), in the work vehicle according to Additional Note (5), the display unit has a plurality of pieces of individual setting information display areas that display the individual setting information for each of the setting items, and a figure and a setting value corresponding to the setting item are displayed in at least one of the individual setting information display areas.

According to Additional Note (7), in the work vehicle according to Additional Note (6), a display screen of the display unit can transition between a home screen that simultaneously displays the measurement information and the setting information and a setting change screen for inputting or changing a setting for the setting item.

According to Additional Note (8), in the work vehicle according to Additional Note (7), the setting change screen has a hierarchical structure that can transition from an upper layer to a lower layer, and when the setting item included in the setting information displayed on the home screen is selected, the display screen of the display unit transitions directly from the home screen to a lower-layer screen that can transition from the setting change screen corresponding to the setting item.

According to Additional Note (9), in the work vehicle according to Additional Note (8), a predetermined setting item included in the setting information displayed on the home screen can be displayed in place of another setting item.

According to Additional Note (10), the work vehicle according to any one of Additional Notes (7) to (9) further includes an input unit that receives at least one of input of the setting and selection of the setting item.

According to Additional Note (11), the work vehicle according to any one of Additional Notes (1) to (10) further includes: a detection unit; and a control unit that acquires the measurement information by calculation based on detection information detected by the detection unit.

Although the embodiment of the present invention has been described above, the scope of the present invention is not limited thereto, and may be expanded or modified without departing from the gist of the invention.

### INDUSTRIAL APPLICABILITY

The work vehicle of the present invention can be used, for example, as a rice transplanter that plants rice seedlings in a field.

### LIST OF REFERENCE SIGNS

- 1: Rice transplanter (work vehicle)
- 27: Positioning unit (detection unit)
- 28: Display unit
- 50: Input unit
- 70: Sensor unit (detection unit)
- 90: Control unit
- 281B: Press button (input unit)
- 284: Select dial (input unit)
- DR: Individual setting information display area
- P1: Measurement Information
- P2: Setting information
- SE: Detection unit
- SH: Figure
- SV: Setting value

## Claims

1. A work vehicle comprising a display unit,
wherein the display unit simultaneously displays measurement information measured as work progresses by the work vehicle and setting information about a setting of the work vehicle.

2. The work vehicle according to claim 1, wherein the display unit displays the measurement information on one side of a display screen in one direction and the setting information on the other side.

3. The work vehicle according to claim 1, wherein the measurement information includes individual measurement information that is measured for a plurality of measurement items.

4. The work vehicle according to claim 3, wherein the plurality of measurement items include the number of seedling mats used in the work and a work area where the work was performed.

5. The work vehicle according to claim 1, wherein the setting information includes individual setting information that is set for a plurality of setting items.

6. The work vehicle according to claim 5,
wherein the display unit has a plurality of pieces of individual setting information display areas that display the individual setting information for each of the setting items, and
a figure and a setting value corresponding to the setting item are displayed in at least one of the individual setting information display areas.

7. The work vehicle according to claim 6, wherein a display screen of the display unit is transitionable between a home screen that simultaneously displays the measurement information and the setting information and a setting change screen for inputting or changing a setting for the setting item.

8. The work vehicle according to claim 7,
wherein the setting change screen has a hierarchical structure that is transitionable from an upper layer to a lower layer, and
when the setting item included in the setting information displayed on the home screen is selected, the display screen of the display unit transitions directly from the home screen to a lower-layer screen that is transitionable from the setting change screen corresponding to the setting item.

9. The work vehicle according to claim 8, wherein a predetermined setting item included in the setting information displayed on the home screen is displayable in place of another setting item.

10. The work vehicle according to claim 7, further comprising an input unit that receives at least one of input of the setting and selection of the setting item.

11. The work vehicle according to any one of claims 1 to 10, further comprising:
a detection unit; and
a control unit that acquires the measurement information by calculation based on detection information detected by the detection unit.
